# EUROPÄISCHE PATENTSCHRIFT

(11) **EP 3 990 905 B1**
(45) Veröffentlichungstag und Bekanntmachung des Hinweises auf die Patenterteilung: **19.08.2026**
(21) Anmeldenummer: 20733756.9
(22) Anmeldetag: 17.06.2020
(51) Int. Cl.: G01N 23/207

(54) **MESSANORDNUNG FÜR RÖNTGENSTRAHLUNG MIT VERMINDERTEN PARALLAX-EFFEKTEN**
MEASURING ARRANGEMENT FOR X-RAY RADIATION HAVING REDUCED PARALLAX EFFECTS
SYSTÈME DE MESURE POUR RAYONS X À EFFETS DE PARALLAXE RÉDUITS

(30) Priorität: 25.06.2019 DE 102019209188
(43) Veröffentlichungstag der Anmeldung: 04.05.2022
(73) Patentinhaber: Bruker AXS SE, 76187 Karlsruhe (DE)
(72) Erfinder: FINK, Jürgen, 76477 Elchesheim-Illingen (DE); MAURER, Christian, 76187 Karlsruhe (DE); BRÜGEMANN, Lutz, 76448 Durmersheim (DE); VENANZI, Cristian, 76187 Karlsruhe (DE)
(74) Vertreter: Kohler Schmid Möbus Patentanwälte
(86) Internationale Anmeldenummer: PCT/EP2020/066807
(87) Internationale Veröffentlichungsnummer: WO 2020/260100

(56) Entgegenhaltungen:
- US-A1- 2017 097 309
- US-A1- 2018 020 996
- DRAKOPOULOS MICHAEL ET AL: "I12: the Joint Engineering, Environment and Processing (JEEP) beamline at Diamond Light Source", JOURNAL OF SYNCHROTRON RADIATION, vol. 22, no. 3, 8 April 2015 (2015-04-08), Hoboken, USA, pages 828 - 838, XP055876223, ISSN: 1600-5775, DOI: 10.1107/S1600577515003513

## Beschreibung

Die Erfindung betrifft eine Messanordnung für Röntgenstrahlung sowie deren Verwendung.

Eine solche Messanordnung ist bekannt geworden durch B. Schmitt et al., Nuclear Instruments and Methods in Physics Research A 501 (2003), 267-272 "Mythen detector system" (=[1]).

Röntgenstrahlung kann zur zerstörungsfreien Untersuchung der Kristallstruktur einer zu vermessenden Probe eingesetzt werden. Die Röntgenstrahlung wird dabei an den Gitterebenen der Kristalle ("Kristallebenen") in der Probe bzw. den zugehörigen Atomen gebeugt. Aus der räumlichen Verteilung der gebeugten Röntgenstrahlung kann auf die Kristallstruktur bzw. Eigenschaften der zu untersuchenden Probe geschlossen werden.

Zur Detektion von Röntgenstrahlen werden verschiedene Typen von Röntgendetektoren eingesetzt. Nulldimensionale Röntgendetektoren gestatten die Detektion von Röntgenstrahlen in einem nur sehr kleinen Raumwinkelbereich; daher wird während der Messung der Röntgendetektor typischerweise über einen interessierenden Raumwinkelbereich gescannt, etwa mit einem Goniometer. Eindimensionale Detektoren gestatten eine ortsaufgelöste Detektion von Röntgenstrahlung entlang einer Raumrichtung. Zweidimensionale Detektoren gestatten sogar eine ortsaufgelöste Detektion entlang zweier Raumrichtungen, sind aber vergleichsweise teuer.

Eine wichtige Art von Röntgenbeugungsmessung ist die Untersuchung von Pulverproben mit einem Röntgenstrahl, wobei im Beugungsbild so genannte Debye-Ringe auftreten. Diese repräsentieren jeweils bestimmte Gitterabstände im Kristall. Aufgrund der zufälligen Orientierung der einzelnen Körner in einer Pulverprobe zum einfallenden Röntgenstrahls beugt jedes Korn den Röntgenstrahl durch die entsprechende Gitterebenen auf eine vorgegebene Stelle des zugehörigen Debye-Rings, und der Debye-Ring wird durch die Gesamtheit der beugenden Pulverkörner im Wesentlichen gleichmäßig ausgeleuchtet. Entsprechend steckt die Information über die Pulverprobe bereits in einem kleinen Umfangsteil der Debye-Ringe.

Für die Auswertung eines Beugungsbildes einer Pulverprobe ("Pulverdiffraktogramm") genügt daher die ortsaufgelöste Auswertung des Beugungsbildes entlang einer beliebigen radialen Richtung über die Debye-Ringe hinweg. Hierfür kann ein eindimensionaler Röntgendetektor eingesetzt werden.

Man beachte, dass auch bei anderen Arten von Röntgenmessungen eine eindimensionale Messinformation ausreichen kann, um eine gewünschte Information über eine Probe zu erhalten.

Detektormodule für eindimensionale Röntgendetektoren können als Halbleiter-Detektormodule ausgebildet sein, bei denen eine Aktivzone, in welcher Röntgenstrahlung detektiert werden kann, in (oft streifenförmige) Sensorelemente unterteilt ist, mit denen eine Ortsauflösung erreicht wird, vgl. beispielsweise G. Lutz, "Semiconductor Radiation Detectors - Device Physics", Springer-Verlag Berlin, 2. Auflage 2007, Seiten 109-111 und 229-233 (=[2]).

Halbleiter-Detektormodule werden grundsätzlich auf ebenen Substraten (Wafern) gefertigt. Bei Halbleiter-Detektormodulen für eine eindimensionale Detektion werden im Stand der Technik die Sensorelemente auf dem Substrat in gerader Linie aufgereiht, und das ebene Substrat wird näherungsweise senkrecht zur von der Probenposition einfallenden Röntgenstrahlung ausgerichtet. Um einen ausgedehnten Winkelbereich (etwa Polarwinkelbereich) zu vermessen, können mehrere Detektormodule hintereinander eingesetzt werden; eine gegenseitige Verkippung der hintereinander angeordneten Detektormodule bildet näherungsweise einen Kreisbogen nach.

Da die von der Probenposition ausgehende gebeugte Röntgenstrahlung sich radial ausbreitet, kommt es bei diesen ebenen Halbleiter-Detektormodulen zu Detektionsfehlern. Röntgenstrahlung trifft nahe der Mitte des Halbleiter-Detektormoduls (bzw. nahe dem Fußpunkt des Lots von der Probenposition auf das Detektormodul) nahezu senkrecht auf die Oberfläche des Halbleiter-Detektormoduls, und in Randbereichen (weiter entfernt vom Fußpunkt des Lots) unter einem deutlich flacheren Winkel auf diese Oberfläche, wobei die Röntgenstrahlung in Randbereichen auch eine größere Entfernung von der Probenposition zum Detektor zurücklegen muss. Dadurch kommt es zu einer Verzerrung des aufgenommenen Beugungsbildes (Parallax-Effekt 1, auch genannt "flat detector error"); insbesondere erscheinen (ansonsten gleiche) Peaks im Randbereich im Vergleich zu nahe der Mitte aufgeweitet, d.h. die gemessene Röntgenintensität je Flächeneinheit am Detektormodul nimmt in den Randbereichen ab. Insgesamt werden die Ortsposition von Röntgenphotonen oder allgemeiner Röntgenpeaks zu den Randbereichen hin mit immer größerem Fehler detektiert.

Bei Verwendung von relativ harter Röntgenstrahlung kann es zudem dazu kommen, dass aufgrund einer merklichen Dicke der Sensorelemente eines Halbleiter-Detektormoduls in den Randbereichen des Sensors (weiter entfernt vom Fußpunkt des Lots) ein Röntgenphoton mehrere nebeneinander liegende Sensorelemente hintereinander durchläuft, und entsprechend mehrere Sensorelemente für die Detektion in Frage kommen (Parallax-Effekt 2, auch "sensor parallax"). Auch dadurch tritt ein zunehmender Fehler in der Bestimmung von Peak-Positionen zu den Randbereichen hinein.

Die beiden Parallax-Effekte sind umso ausgeprägter, je größer das Halbleiter-Detektormodul ist, und je kleiner der Abstand zwischen der Probenposition und dem Halbleiter-Detektormodul ist.

Beide Effekte treten in einem echt kreisbogenförmigen (oder echt kugelförmigen) Detektor nicht auf, da dann die Röntgenstrahlen in jedem Punkt senkrecht auf die Oberfläche des Detektors treffen. Halbleiter-Detektormodule mit einer kreisbogenförmigen Aktivzone sind jedoch bisher nicht verfügar.

Detektormodule für eine eindimensionale Röntgendetektion können auch als Gasdetektoren (auch genannt gasgefüllter Proportionaldetektor) ausgebildet sein, bei denen ein Röntgenquant einen Ladungsimpuls auslöst, der zu gegenüberliegenden Rändern der Aktivzone läuft, so dass aus der Laufzeitdifferenz auf den Auftreffort am Gasdetektor geschlossen werden kann, vgl. beispielsweise G. F. Knoll, "Radiation Detection and Measurement", John Wiley and Sons, Inc., New York, Second Edition 1989, Seite 190 (=[3]), oder auch F. H. W. Heuck, E. Macherauch, "Forschung mit Röntgenstrahlen Bilanz eines Jahrhunderts (1895-1995)", Springer-Verlag Berlin 1995, Seiten 359-360 (=[4]).

Solche Gasdetektoren können auch mit einer kreisbogenförmigen Aktivzone ausgebildet werden, vgl. L. Spieß et al., "Moderne Röntgenbeugung - Röntgendiffraktometrie für Materialwissenschaftler, Physiker und Chemiker", B.G. Teubner Verlag / GWV Fachverlage GmbH, Wiesbaden 2005, Bild 4.23, Seite 126 (=[5]). In diesem Fall treten die oben genannten Parallax-Effekte nicht auf.

Gasdetektoren sind jedoch in der globalen Zählrate begrenzt (meist um 1 Mcps), und weisen im Vergleich zu halbleiterbasierten Detektormodulen eine schlechtere Ortsauflösung und Energieauflösung und zudem eine begrenzte Haltbarkeit auf.

Verschiedene Röntgendetektoren und Röntgendiffraktometer auf Basis von Halbleiter-Detektormodulen oder Gasdetektoren sind aus den weiteren Dokumenten [6]-[16] bekannt geworden.

Die US 2018/020996 A1 (=[17]) beschreibt eine Messanordnung für Röntgenstrahlung mit einem Probenhalter, der eine zu messende Probe hält und mit einem Röntgenstrahl beleuchtet wird. Die zu messende Probe tritt mit dem Röntgenstrahl in Wechselwirkung, und die von der zu messenden Probe ausgehende Röntgenstrahlung wird von einer Detektorvorrichtung mit mehreren aufeinanderfolgend angeordneten Detektorelementen detektiert. Die Detektorelemente sind planar angeordnet.

### Aufgabe der Erfindung

Es ist Aufgabe der Erfindung, eine Messanordnung vorzustellen, die mit ebenen Detektormodulen, insbesondere Halbleiter-Detektormodulen, realisierbar ist und weniger anfällig für Messfehler ist.

### Beschreibung der Erfindung

Diese Aufgabe wird erfindungsgemäß gelöst durch eine Messanordnung gemäß Anspruch 1 gelöst.

Im Rahmen der Erfindung ist vorgesehen, ein Detektormodul, insbesondere Halbleiter-Detektormodul, so auszubilden und zur Probenposition auszurichten, dass zumindest die Mehrheit der Sensorelemente, und bevorzugt alle Sensorelemente, mit ihrem Flächenschwerpunkt den gleichen Abstand R0 zur Probenposition aufweisen. Alle Sensorelemente, deren Flächenschwerpunkt den Abstand R0 zur Probenposition aufweisen, werden jeweils als "gleichbeabstandetes Sensorelement" bezeichnet.

Um dies mit einem ebenen Detektormodul (bzw. ebenen Substrat) einrichten zu können, auf dem die Sensorelemente in einer gemeinsamen Sensorebene des Detektormoduls angeordnet sind, ist es lediglich nötig, die im Stand der Technik übliche Aufreihung der Sensorelemente (bzw. von deren Flächenschwerpunkten) in gerader Linie aufzugeben. Dadurch wird ein zusätzlicher Freiheitsgrad bei der Positionierung der Sensorelemente bzw. der Flächenschwerpunkte gewonnen. Dieser kann dazu genutzt werden, den erfindungsgemäß vorgesehenen, gleichen Abstand R0 zur Probenposition einzustellen. Im Rahmen der Erfindung erfolgt dafür eine Aufreihung der Sensorelemente bzw. deren Flächenschwerpunkten auf dem Detektormodul entlang einer gekrümmten Bahn (also entsprechend einer "gekrümmte Messrichtung"), nämlich einer Kreisbahn.

Dadurch, dass die Sensorstreifen bzw. deren Flächenschwerpunkte einen gleichen Abstand R0 zur Probenposition aufweisen, ist ein Messfehler der Röntgenintensität pro aktiver Flächeneinheit über die gleichbeabstandeten Sensorelemente des Detektormoduls minimiert. Abhängig von der Anordnung des Detektormoduls tritt ein Einfallswinkel der Röntgenstrahlung am Detektormodul (gemessen gegen das Lot der Sensorebene) auf, der im Allgemeinen kleiner als 90° ist. Dadurch treten Parallax-Fehler am Detektormodul bzw. dessen Sensorelementen auf, die aber für alle Sensorelemente eines Detektormoduls gleich sind. Entsprechend bleiben die mit dem Detektormodul an unterschiedlichen Orten gemessenen Intensitäten (pro Flächeneinheit) vergleichbar.

Die erfindungsgemäße Messanordnung dient zur Gewinnung einer eindimensionalen Röntgenbeugungsinformation über eine Messprobe (auch einfach genannt "Probe") an der Probenposition. Die mehreren Sensorelemente (und typischerweise auch die gleichbeabstandeten Sensorelemente) sind in der Messrichtung aufeinanderfolgend angeordnet, wodurch eine Ortsauflösung der Messanordnung bzw. des Detektormoduls entlang dieser Messrichtung eingerichtet wird. Jede Position entlang der Messrichtung wird durch ein (typischerweise gleichbeabstandetes) Sensorelement repräsentiert. Die Sensorelemente sind typischerweise streifenförmig ausgebildet.

Typischerweise umfasst ein Detektormodul wenigstens 10, bevorzugt wenigstens fünfzig, besonders bevorzugt wenigstens 100, gleichbeabstandete Sensorelemente. Der Flächenschwerpunt eines Sensorelements bezieht sich auf dessen Messbereich (Eintrittsfenster, Aktivzone) für zu vermessende Röntgenstrahlung.

### Bevorzugte Ausführungsformen

Bei einer bevorzugten Ausführungsform einer erfindungsgemäßen Messanordnung ist vorgesehen, dass die Sensorebene in einer Schnittebene liegt, die eine Hilfskugel mit dem Radius R0 um die Probenposition schneidet, so dass die Flächenschwerpunkte der gleichbeabstandeten Sensorelemente auf einer kreisförmigen ersten Schnittlinie der Schnittebene mit der Hilfskugel liegen, wobei die kreisförmige erste Schnittlinie einen Radius R1 aufweist,
und dass die Schnittebene beabstandet von der Probenposition liegt. Dies ist eine besonders einfache Möglichkeit, gleichbeabstandete Sensorelemente einzurichten. Typischerweise wird mit einem Detektormodul lediglich maximal ein Halbkreis mit Sensorelementen abgedeckt, da dieser (bei geeigneter Platzierung/Orientierung) ausreicht, um alle Beugungsinformationen der Probe der gesamten kreisförmigen ersten Schnittlinie zu erhalten; es ist aber auch möglich, einen größeren Teil der ersten Schnittlinie zu nutzen. Dadurch, dass die Schnittebene beabstandet von der Probenposition liegt, also R1<R0 ist, können die Sensorelemente von ihrer flachen Seite aus mit Röntgenstrahlung bestrahlt werden. Je kleiner R1 im Vergleich zu R0 ist, desto größer ist der Einfallswinkel am Sensorelement, und desto kleiner wird der Parallax-Effekt 2. Daher ist es allgemein bevorzugt, R1≤0,75*R0 zu wählen. Man beachte, dass alternativ auch vorgesehen sein kann, die Schnittebene durch die Probenposition zu legen, also R1=R0 zu wählen; in diesem Fall werden die Sensorelemente über eine Kante ("edge on") bestrahlt.

Erfindungsgemäß umfasst die Messanordnung weiterhin eine Röntgenquelle, die einen Röntgenstrahl entlang einer Einstrahlrichtung auf die Probenposition richtet, insbesondere wobei an der Probenposition eine zu untersuchende Probe angeordnet ist. Der Röntgenstrahl kann an der zu untersuchenden Probe an der Messposition gebeugt werden, wodurch Informationen über die Kristallstruktur der Probe erhalten werden. Zu jedem Flächenschwerpunkt eines Sensorelements wird ein Polarwinkel definiert, gemessen zwischen der Einstrahlrichtung und einer Verbindungsgeraden von der Probenposition zu diesem Flächenschwerpunkt. Die verschiedenen Flächenschwerpunkte der gleichbeabstandeten Sensorelemente eines Detektormoduls sind im Rahmen der Erfindung die Polarwinkel verschieden eingerichtet.

Bevorzugt ist eine Ausführungsform, bei der zumindest die gleichbeabstandeten Sensorelemente als streifenförmige Sensorelemente ausgebildet sind. Typischerweise sind alle Sensorelemente des Detektormoduls als streifenförmige Sensorelemente ausgebildet. Die streifenförmigen Sensorelemente folgen auf dem Detektormodul bezüglich der (gekrümmten) Messrichtung aufeinander, um entlang dieser Messrichtung eine Ortsauflösung der Messanordnung bzw. des Detektormoduls einzurichten. Die streifenförmigen Sensorelemente sind entlang einer Querrichtung, die quer zur Messrichtung liegt, länger ausgebildet als entlang der Messrichtung. Ein streifenförmiges Sensorelement kann (bevorzugt) als Einzelelement einen in Querrichtung nicht-unterteilten streifenförmigen Messbereich ausbilden, oder auch (alternativ) als Kombielement einen in Querrichtung in Unterpixel unterteilten streifenförmigen Messbereich ausbilden; in letzterem Fall wird für die Gesamtheit dieser (zusammenhängenden) Unterpixel bzw. für den gesamten unterteilten streifenförmigen Messbereich der Flächenschwerpunkt bestimmt, und die (zusammenhängenden) Unterpixel an dieser Position in Messrichtung bilden ein einziges Sensorelement.

Bei einer bevorzugten Weiterbildung, bei der die Flächenschwerpunkte der gleichbeabstandeten Sensorelemente auf der ersten Schnittlinie der Schnittebene liegen, eine Röntgenquelle entlang der Einstrahlrichtung mit einem Röntgenstrahl die Probenposition beleuchtet, und die gleichbeabstandeten Sensorelemente streifenförmig ausgebildet sind, ist vorgesehen, dass ein jeweiliges streifenförmiges gleichbeabstandetes Sensorelement so ausgerichtet ist, dass eine Hilfs-Kegelmantelfläche mit einem Scheitelpunkt an der Probenposition und einer Kegelachse entlang oder entgegen der Einstrahlrichtung einen Schnittpunkt mit dem streifenförmigen Sensorelement an dessen Flächenschwerpunkt hat, und das streifenförmige gleichbeabstandete Sensorelement zumindest näherungsweise entlang einer zweiten Schnittlinie der Hilfs-Kegelmantelfläche mit der Schnittebene verläuft. Mit anderen Worten, ein jeweiliges streifenförmiges Sensorelement ist mit seiner Längsrichtung im Wesentlichen entlang möglicher Debye-Ringe ausgerichtet. Dadurch kann die gemessene gebeugte Röntgenintensität von einer Probe an der Probenposition maximiert werden. Typischerweise verläuft ein streifenförmiges Sensorelement mit weniger als 15° Abweichung von der zweiten Schnittlinie, bevorzugt mit weniger als 10° Abweichung, besonders bevorzugt mit weniger als 5° Abweichung.

Bevorzugt verläuft das streifenförmige gleichbeabstandete Sensorelement entlang einer Tangente der zweiten Schnittlinie am Flächenschwerpunkt des Sensorelements in der Schnittebene. Dies ist mit (individuell) gerade verlaufenden Sensorelementen einfach einzurichten.

Ebenso bevorzugt ist eine Weiterbildung, bei der die streifenförmigen gleichbeabstandeten Sensorelemente des Detektormoduls eine gleiche effektive Länge EL aufweisen, über die von der Probenposition ausgehende Röntgenstrahlung durch das jeweilige streifenförmige Sensorelement registriert werden kann. Dadurch sind die an den unterschiedlichen Sensorelementen bzw. an unterschiedlichen Positionen entlang der Messrichtung gemessenen Intensitäten gut vergleichbar. Die effektive Länge kann insbesondere über eine Maske eingestellt werden.

Bevorzugt ist auch eine Ausführungsform, bei der das Detektormodul eine Maske aufweist, mit der zumindest bei einem Teil der Sensorelemente des Detektormoduls ein Teil des jeweiligen Sensorelements gegenüber der Probenposition abgeschattet wird. Die Maske kann insbesondere dazu dienen, bei einem Detektormodul mit streifenförmigen Sensorelementen einen Teil der Länge (in Querrichtung) der jeweiligen Sensorelemente abzuschatten. Durch die Maske können die Flächenschwerpunkte der Sensorelemente ausgerichtet werden, insbesondere um die Flächenschwerpunkte der Sensorelemente auf den Radius R0 einzustellen. Ebenso kann mit der Maske der vermessene Bereich (in Querrichtung) eingestellt werden, um ggf. eine Ortsauflösung in Querrichtung einzustellen bzw. zu verbessern.

Bei einer bevorzugten Ausführungsform der erfindungsgemäßen Messanordnung weist die Messanordnung mehrere Detektormodule auf, wobei die Sensorebenen der mehreren Detektormodule in einer gemeinsamen Schnittebene liegen. Die mehreren Detektormodule sind jeweils wie oben beschrieben mit gleichbeabstandeten Sensorelementen ausgebildet. Durch die Verwendung mehrerer Detektormodule kann auf einfache Weise ein größerer Raumwinkelbereich vermessen werden, mit geeigneter Anordnung der Aktivzonen der Detektormodule auch ohne Lücken. Die Anordnung der Detektormodulen in einer gemeinsamen Schnittebene ist baulich besonders einfach. Die Flächenschwerpunkte der Sensorelemente der Detektormodule können dann auf einer (gemeinsamen) ersten Schnittlinie der gemeinsamen Schnittebene mit einer Hilfskugel des Radius R0 um die Probenposition liegen, wobei die erste Schnittlinie einen Radius R1 hat; typischerweise ist dann der Radius R1 relativ groß gewählt, etwa mit R1≥0,5*R0. Bei allen gleichbeabstandeten Sensorelementen mit den Flächenschwerpunkten auf dieser gemeinsamen ersten Schnittlinie tritt der gleiche Einfallswinkel von gebeugter Röntgenstrahlung zum Lot der gemeinsamen Schnittebene (und damit auch zum Lot der jeweiligen Sensorebene) auf, und damit der gleiche Parallaxfehler.

In einer vorteilhaften Ausführungsform weist die Messanordnung mehrere Detektormodule auf, wobei die Sensorebenen der mehreren Detektormodule in verschiedenen Schnittebenen liegen. Die mehreren Detektormodule sind jeweils wie oben beschrieben mit (zumindest bezüglich des jeweiligen Detektormoduls, und bevorzugt bezüglich der gesamten Messanordnung) gleichbeabstandeten Sensorelementen ausgebildet. Durch die Verwendung mehrerer Detektormodule kann auf einfache Weise ein größerer Raumwinkelbereich vermessen werden, mit geeigneter Anordnung der Aktivzonen der Detektormodule auch ohne Lücken. Die Verwendung verschiedener Schnittebenen ermöglicht dabei einen kompakten Bau der Messanordnung (bei großem abgedeckten Raumwinkelbereich) und auch einen steilen Einfall der gebeugten Röntgenstrahlung am Detektor, was hilft, Messfehler zu minimieren.

Bevorzugt ist eine Weiterbildung dieser Ausführungsform, die vorsieht, dass um die Probenposition eine Hilfskugel mit dem Radius R0 liegt, die von den verschiedenen Schnittebenen der Detektormodule geschnitten wird, so dass die Flächenschwerpunkte der gleichbeabstandeten Sensorelemente eines jeweiligen Detektormoduls jeweils auf einer kreisförmigen ersten Schnittlinie der jeweiligen Schnittebene mit der Hilfskugel liegen, wobei die jeweiligen kreisförmigen ersten Schnittlinien einen gleichen Radius R1 aufweisen,
und dass die jeweiligen ersten Schnittebenen beabstandet von der Probenposition liegen. Diese Weiterbildung ist besonders einfach, und gestattet insbesondere die Verwendung baugleicher oder ähnlich ausgebildeteter Detektormodule. Zudem kann ein Einfallswinkel für Röntgenstrahlen auf den Sensorelementen (also der Winkel zwischen der einfallenden Röntgenstrahlung und dem Lot der jeweiligen lokalen Schnittebene bzw. lokalen Sensorebene) durch das gleiche R1 aller Detektormodule bei allen Detektormodulen gleich eingerichtet werden; die Parallaxfehler sind dann überall gleich, wodurch die Messergebnisse der Detektormodule untereinander gut vergleichbar sind.

Bevorzugt ist eine Weiterentwicklung, bei der eine Röntgenquelle entlang einer Einstrahlrichtung einen Röntgenstrahl auf die Probenposition richtet, die vorsieht, dass die Mittelpunkte der kreisförmigen ersten Schnittlinien auf oder nahe einer gemeinsamen Grundebene liegen, die die Einstrahlrichtung enthält, insbesondere wobei für einen jeweiligen Abstand AMG zwischen einem jeweiligen Mittelpunkt und der Grundebene gilt: AMG ≤ 1/10*R0. Dieser Aufbau ist einfach und kann auf kompaktem Raum Informationen über den (falls gewünscht) gesamten Polarwinkel-Bereich einer Messprobe auf der Probenposition vermessen. Die gebeugten Röntgenstrahlen fallen nahezu senkrecht auf die Sensorelemente, wodurch Parallax-Effekte minimiert werden können.

Bevorzugt ist auch eine Weiterentwicklung, bei der gilt: R1 ≤ 1/5*R0, bevorzugt R1 ≤ 1/10*R0. Auch durch kleine Radien R1 der ersten Schnittlinien können Parallax-Effekte minimiert werden.

Eine andere Weiterbildung der obigen beiden Ausführungsformen mit mehreren Detektormodulen sieht vor, dass die Detektormodule mit ihren Sensorelementen jeweils einen Modul-Winkelbereich von von der Probenposition ausgehender Röntgenstrahlung lückenlos abdecken, und durch die Gesamtheit der Detektormodule ein Gesamt-Winkelbereich von von der Probenposition ausgehender Röntgenstrahlung lückenlos abgedeckt wird, wobei der Gesamt-Winkelbereich größer ist als jeder der Modul-Winkelbereiche. Dadurch kann in kurzer Zeit eine große Menge an Messinformationen über eine Probe an der Probenposition gewonnen werden, insbesondere auch ohne die Messanordnung bzw. den Röntgendetektor scannen zu müssen. Die lückenlose Abdeckung des Gesamt-Winkelbereichs kann dadurch erreicht werden, dass die Aktivzonen der Detektormodule bezüglich der interessierenden Winkelbereichs überlappen oder unmittelbar aneinander anschließen. Man beachte, dass dabei die Detektormodule trotz ihrer unvermeidlichen Totzonen (die um die Aktivzonen liegen) nebeneinander angeordnet bleiben können (also bezüglich der Einfallsrichtung der gebeugten Röntgenstrahlung nicht überlappen müssen), da die Messinformation desselben Winkelbereichs azimutal redundant über den zugehörigen Debye-Kegel/Debye-Ring (oder zumindest in guter Näherung über einen gewissen Teil davon) zur Verfügung steht, und die Detektormodule bzw. deren Aktivzonen entsprechend an azimutal voneinander entfernt liegenden Stellen angeordnet werden können.

Eine bevorzugte Weiterentwicklung hierzu, bei der eine Röntgenquelle entlang einer Einstrahlrichtung einen Röntgenstrahl auf die Probenposition richtet, sieht vor, dass die Detektormodule jeweils einen Modul-Polarwinkelbereich lückenlos abdecken, und die Gesamtheit der Detektormodule einen Gesamt-Polarwinkelbereich lückenlos abdeckt, wobei zugehörige Polarwinkel mit Bezug zur Einstrahlrichtung gemessen werden. Die Kristallstruktur-Information einer (pulverförmigen) Messprobe steckt in der Intensitätsverteilung der gebeugten Röntgenstrahlung über einen Polarwinkelbereich von 0-90°, ohne dass es auf den Azimuthwinkel ankommt. Entsprechend kann mit dieser Bauform eine gewünschte Information über die Probe an der Probenposition effizient gewonnen werden. Man beachte, dass in der Regel sehr kleine Polarwinkel (z.B. <5°) nicht vermessen werden, um nicht die Sensorelemente durch den ungebeugten Strahl und dessen Streukegel zu überlasten.

Eine weitere Weiterbildung sieht vor, dass die Detektormodule mit einer geometrisch gleichen Abfolge der Sensorelemente ausgebildet sind, insbesondere wobei die Sensorelemente insgesamt baugleich ausgebildet sind,
oder dass die Detektormodule mit lediglich zwei unterschiedlichen geometrischen Abfolgen der Sensorelemente ausgebildet sind, insbesondere wobei die beiden geometrische Abfolgen spiegelsymmetrisch zueinander sind, und insbesondere wobei die Detektormodule mit den unterschiedlichen geometrischen Abfolgen insgesamt spiegelsymmetrisch zueinander aufgebaut sind. Dadurch wird die Messanordnung besonders kostengünstig und einfach herstellbar. Diese Bauform kann insbesondere angewandt werden, wenn für jedes Detektormodul eine eigene Schnittebene gewählt ist, aber die jeweiligen ersten Schnittlinien den gleichen Radius R1 aufweisen.

Bevorzugt ist auch eine Ausführungsform, bei der eine Röntgenquelle entlang einer Einstrahlrichtung einen Röntgenstrahl auf die Probenposition richtet, die vorsieht, dass die Röntgenquelle oder ein Zwischenfokus der Röntgenquelle in einem Abstand R0 von der Probenposition angeordnet ist, und dass eine zu vermessende Probe an der Probenposition angeordnet ist, welche den einfallenden Röntgenstrahl beugt, so dass ein Teil der gebeugten Röntgenstrahlung in einem Abstand R0 von der Probenposition fokussiert wird. Diese Bragg-Brentano-Geometrie ist in der Praxis bewährt und ermöglicht sehr scharfe Beugungsreflexe. Man beachte, dass die Messanordnung auch mehrere Röntgenquellen umfassen kann, die insbesondere eine unterschiedliche Wellenlänge eines zur Verfügung gestellten Röntgenstrahls aufweisen; letzteres kann durch geeignete Auswahl der von den mehreren Röntgenquellen erzeugten Röntgenstrahlung störende Reflexüberlagerungen oder störende Röntgenfluoreszenz vermeiden.

In den Rahmen der vorliegenden Erfindung fällt auch die Verwendung einer erfindungsgemäßen, oben beschriebenen Messanordnung zur Durchführung einer Röntgenbeugungsmessung an einer Probe, die an der Probenposition angeordnet ist, wobei ein Röntgenstrahl entlang einer Einstrahlrichtung auf die Probe gerichtet wird, wobei mit dem Röntgendetektor von der Probe ausgehende Röntgenstrahlung detektiert wird, und wobei während der Vermessung der Probe der Röntgendetektor ortsfest bleibt oder lediglich um die Einstrahlrichtung gedreht wird. Diese Verwendung eignet sich insbesondere zur Vermessung von pulverförmigen Messproben. Der benötigte Messaufbau ist sehr einfach und eignet sich gut für online-Vermessungen (bevorzugt bei ortsfestem Röntgendetektor und ortsfester Röntgenquelle). Mit einer Drehung um die Einstrahlrichtung kann auf einfache Weise eine Stressmessung erfolgen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt in einer schematischen Schrägansicht die Beugung eines Röntgenstrahls an einer Probe an einer Probenposition, wie sie in einer erfindungsgemäßen Messanordnung auftritt;
- Fig. 2: zeigt in einer schematischen Schrägansicht die Einrichtung einer Schnittebene und einer ersten Schnittlinie zur Anordnung von gleichbeabstandeten Sensorelementen gemäß der Erfindung;
- Fig. 3: zeigt in einer schematischen Schrägansicht eine erste Ausführungsform einer erfindungsgemäßen Messanordnung, mit einem einzigen Detektormodul;
- Fig. 4: zeigt eine schematische Aufsicht auf das Detektormodul von Fig. 3;
- Fig. 5: zeigt eine schematische Schrägansicht einer zweiten Ausführungsform einer erfindungsgemäßen Messanordnung, mit vier Detektormodulen, deren Sensorebenen in einer gemeinsamen Schnittebene liegen;
- Fig. 6: zeigt eine schematische Aufsicht auf die Detektormodule von Fig. 5;
- Fig. 7: zeigt eine schematische Perspektivansicht auf eine dritte Ausführungsform einer erfindungsgemäßen Messanordnung, mit einer Vielzahl von Detektormodulen, die in verschiedenen Schnittebenen liegen, mit gleichartig gebauten Detektormodulen;
- Fig. 8: zeigt eine ebene Projektion der Detektormodule von Fig. 7;
- Fig. 9: zeigt eine schematische Perspektivansicht auf eine vierte Ausführungsform einer erfindungsgemäßen Messanordnung, mit einer Vielzahl von Detektormodulen, die in verschiedenen Schnittebenen liegen, mit zwei spiegelsymmetrisch gebauten Typen von Detektormodulen;
- Fig. 10: zeigt eine ebene Projektion der Detektormodule von Fig. 9;
- Fig. 11: zeigt eine erfindungsgemäße Messanordnung entsprechend der Ausführungsform von Fig. 10, bei einer Anwendung zur Qualitätssicherung;
- Fig. 12: zeigt eine erfindungsgemäße Messanordnung entsprechend der Ausführungsform von Fig. 8, bei einer Anwendung zur Spannungsmessung;
- Fig. 13: zeigte eine erfindungsgemäße Messanordnung entsprechend der Ausführungsform von Fig. 8, bei Verwendung von zwei Röntgenquellen unterschiedlicher Wellenlänge in Bragg-Brentano-Geometrie;
- Fig. 14: eine schematische Aufsicht auf ein erfindungsgemäßes Detektormodul, mit teilweiser Abdeckung von streifenförmigen Sensorelementen durch eine Maske.

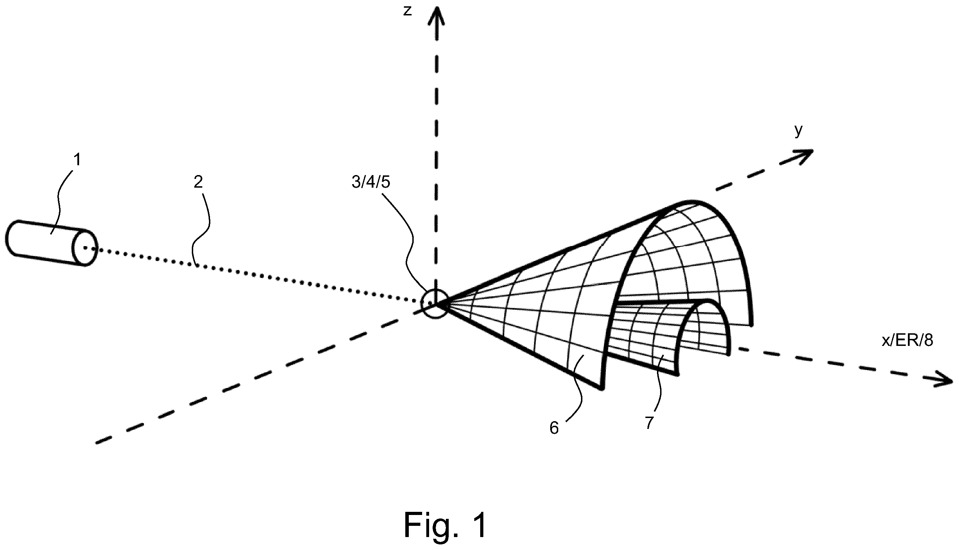

Die **Fig. 1** zeigt in einer schematischen Schrägansicht einen Messaufbau, wie er der vorliegenden Erfindung zugrunde liegt.

Eine Röntgenquelle 1, hier eine Röntgenröhre, emittiert einen Röntgenstrahl 2. Dieser Röntgenstrahl 2 propagiert entlang einer Einstrahlrichtung ER (x-Richtung) und ist auf eine Probenposition 3 gerichtet, an der eine zu vermessende Probe 4 (nicht näher dargestellt) angeordnet ist.

Die Probe 4 ist hier eine pulverförmige Probe, so dass die Kristallebenen der Pulverkörner in der Probe 4 im Wesentlichen zufällig orientiert sind (entsprechendes gälte auch für polykristalline Proben mit einer anisotropen Orientierung der Kristallite im Gefüge). Die Beugung des Röntgenstrahls 2 an einer bestimmten Kristallebene eines Pulverkorn führt zu einem gebeugten Röntgenstrahl, der auf einem bestimmten Hilfs-Kegelmantel 6, 7 liegt, wobei sich der Scheitelpunkt 5 des Hilfs-Kegelmantels 6, 7 an der Probenposition 3 befindet und die Kegelachse 8 des Kegelmantels 6, 7 mit der Einstrahlrichtung ER zusammenfällt. Beispielhaft sind in Fig. 1 zwei Hilfs-Kegelmäntel 6, 7 eingezeichnet, die zu unterschiedlichen Kristallebenen (bzw. zugehörigen Gitterabständen) gehören; diese Hilfs-Kegelmäntel 6, 7 werden auch als Debye-Kegel bezeichnet. Die Hilfs-Kegelmäntel 6, 7 repräsentieren einen zugehörigen Polarwinkel der an der bestimmten Kristallebene gebeugten Röntgenstrahlung, entsprechend dem halben Kegelwinkel des Hilfs-Kegelmantels 6, 7. Entsprechend der zufälligen Orientierung der gleichzeitig bestrahlten, zahlreichen Pulverkörner der Probe 4 werden die Hilfs-Kegelmäntel 6, 7 bezüglich der azimutalen Richtung ("Umfangsrichtung") im Wesentlichen gleichmäßig von gebeugter Röntgenstrahlung ausgeleuchtet.

Man beachte, dass eine analoge Beugung des Röntgenstrahls 2 auch in Richtung entgegen der Einstrahlrichtung ER (also in Richtung -x) stattfindet, was zur Vereinfachung nicht näher gezeigt ist.

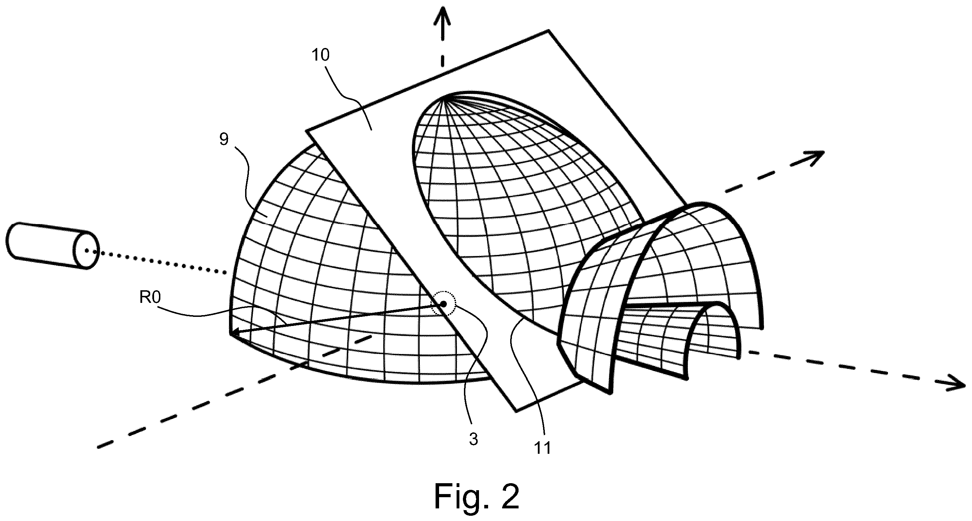

Um die Probenposition 3 kann nun eine gedachte Hilfskugel 9 angeordnet werden, deren Radius R0 beträgt, vgl. **Fig.** 2. Durch diese Hilfskugel 9 wird eine gedachte Schnittebene 10 gelegt, wobei diese Schnittebene 10 die Probenposition 3 nicht schneidet. Die Schnittebene 10 und die Hilfskugel 9 weisen eine erste Schnittlinie 11 auf. Alle Orte auf dieser ersten Schnittlinie 11 weisen somit den identischen Abstand R0 zur Probenposition 3 auf.

Wenn nun die Sensorelemente eines Detektormoduls mit ihren Flächenschwerpunkten so angeordnet werden, dass diese auf der ersten Schnittlinie 11 liegen, haben diese Flächenschwerpunkte alle den identischen Abstand R0 zur Probenposition 3.

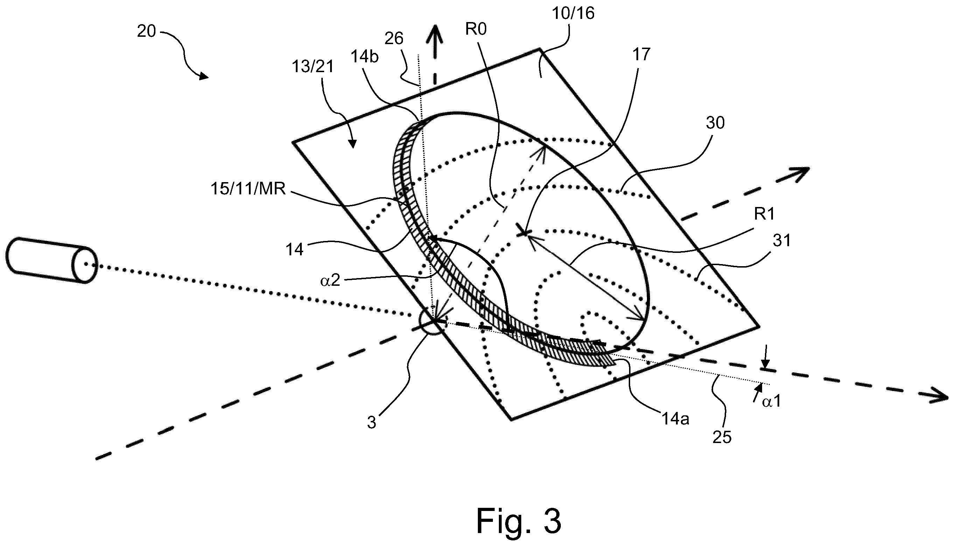

In einer ersten Ausführungsform einer erfindungsgemäßen Messanordnung 20, die in **Fig.** 3 dargestellt ist, weist ein Röntgendetektor 13 der Messanordnung 20 nur ein einziges Detektormodul 21 auf.

Dieses Detektormodul 21 weist eine Vielzahl von hier streifenförmigen Sensorelementen 14 auf, die entlang einer Kreisbahn 15 mit dem Radius R1 um einem Mittelpunkt 17 aufeinanderfolgend angeordnet sind; die Kreisbahn 15 entspricht der ersten Schnittlinie 11. Die Kreisbahn 15 definiert mit ihrem Verlauf eine bogenförmig (also gekrümmt) verlaufende Messrichtung MR, entlang der die Sensorelemente 14 aufgereiht angeordnet sind, und entlang der mit den Sensorelementen 14 eine gebeugte Röntgenintensität ortsaufgelöst vermessen werden kann.

Die Sensorelemente 14 sind alle in einer gemeinsamen Sensorebene 16 angeordnet; diese gemeinsame Sensorebene 16 entspricht der Schnittebene 10 und ergibt sich baulich aus einem ebenen Substrat (Wafer), auf dem die aus Halbleitermaterial gefertigten Sensorelemente 14 abgeschieden sind.

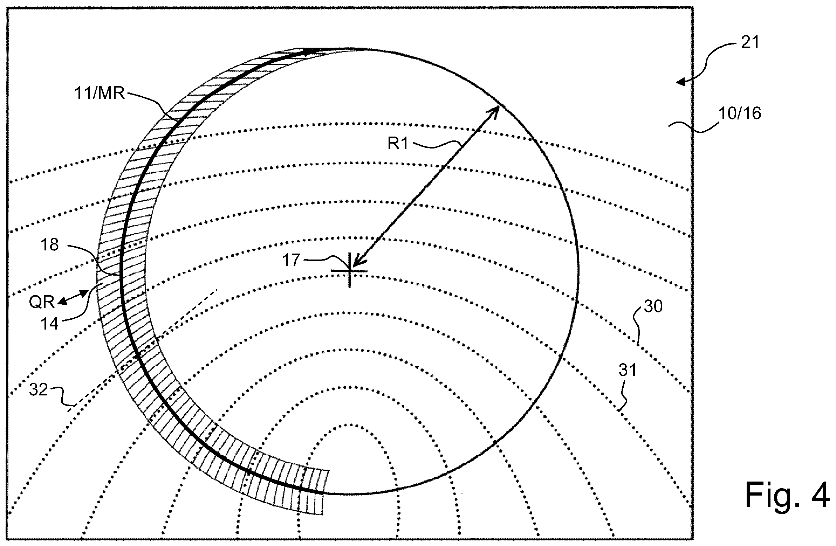

In der Aufsicht von **Fig. 4** auf das Detektormodul 21 von Fig. 3 sind die streifenförmigen Sensorelemente 14 zu erkennen, die entlang der gekrümmt verlaufenden Messrichtung MR (als dicker schwarzer Pfeil eingezeichnet) aufgereiht sind. Die Sensorelemente 14 sind mit ihren langen Seiten jeweils entlang einer lokalen Querrichtung QR ausgerichtet sind, die quer zur lokalen Messrichtung MR (meist aber nicht exakt senkrecht zur lokalen Messrichtung MR) verläuft. Die Flächenschwerpunkte 18 ("Zentren") der Sensorelemente 14 liegen jeweils genau auf der ersten Schnittlinie 11.

Da die erste Schnittlinie 11 auf der Oberfläche der Hilfskugel mit dem Radius R0 verläuft, haben diese Flächenschwerpunkte 18 alle den Abstand R0 zur Probenposition 3.

Die Schnittebene 10 bzw. die gemeinsame Sensorebene 16 wird auch von den Hilfs-Kegelmänteln (vgl. Bzz. 6, 7 in Fig. 1) durchstoßen, nämlich an zweiten Schnittlinien 30, 31; beispielhaft sind in Fig. 4 zwei solche gepunktet dargestellte, zweite Schnittlinien mit Bezugszeichen 30, 31 markiert. Man beachte, dass zweite Schnittlinien 30, 31 für alle möglichen Polarwinkel bestimmt werden können, unabhängig davon, ob in der Probe entsprechende Kristallebenen existieren oder nicht. Die streifenförmigen Sensorelemente 14 sind mit ihren langen Seiten jeweils im Wesentlichen entlang den lokalen zweiten Schnittlinien 30, 31 angeordnet. Insbesondere kann dafür ein jeweiliges streifenförmiges Sensorelement 14 mit seinen langen Seiten parallel zu einer Tangente 32 angeordnet werden, die jeweils an eine zweite Schnittlinie (hier 31) am Schnittpunkt mit der ersten Schnittlinie 11 (bzw. am zugehörigen Flächenschwerpunkt 18 des Sensorelements 14) angelegt wird.

In der gezeigten Ausführungsform sind alle streifenförmigen Sensorelemente 14 des Detektormoduls 21 als gleichbeabstandete Sensorelemente 14 ausgebildet, also mit einem Flächenschwerpunkt 18 auf der Schnittlinie 11 und somit einem Abstand des Flächenschwerpunkts 18 von R0 zur Probenposition.

Zudem überdeckten die Sensorstreifen 14 des Detektormoduls 21 einen geschlossenen (lückenlosen) Raumwinkelbereich (Raumwinkelintervall), nämlich Polarwinkelbereich, von gebeugter Röntgenstrahlung zwischen einem Polarwinkel α1 (hier ca. 5°) beim untersten Sensorelement 14a und einem Polarwinkel α2 (hier ca. 85°) beim obersten Sensorelement 14b (vgl. Fig. 3 hierzu). Der Polarwinkel ist der Zwischenwinkel zwischen der jeweiligen Verbindungsgeraden des Flächenschwerpunkts des Sensorelements 14 mit der Probenposition 3 einerseits und der Einstrahlrichtung ER andererseits, vgl. die Verbindungsgeraden 25, 26 zu den Flächenschwerpunkten der Sensorelemente 14a, 14b in Fig. 3. Man beachte, dass die Verbindungsgeraden 25 und 26 unter einem gleichen Einfallswinkel auf die Sensorebene 16 treffen (gemessen zu einem Lot/Flächennormalen der Sensorebene, nicht näher dargestellt). Man beachte weiterhin, dass jede der zweiten Schnittlinien 30, 31 jeweils einen einheitlichen Polarwinkel repräsentiert.

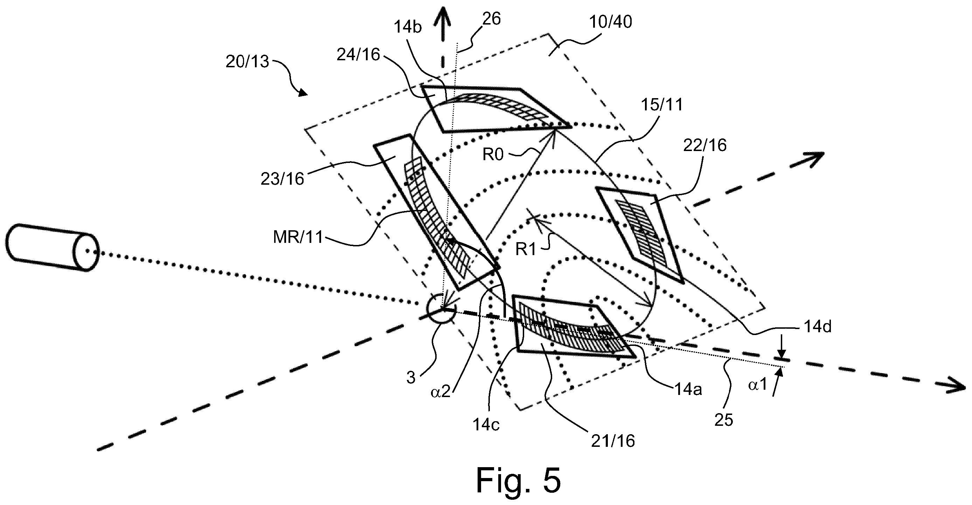

Die **Fig. 5** illustriert eine zweite Ausführungsform einer Messanordnung 20 gemäß der Erfindung. Bei dieser Ausführungsform verfügt der Röntgendetektor 13 über hier vier Detektormodule 21, 22, 23, 24.

Die Schnittebene 10, in der die erste Schnittlinie 11 mit der gedachten Hilfskugel mit dem Radius R0 liegt (nicht näher dargestellt, vgl. aber Fig. 2 hierzu), ist hier eine gemeinsame Schnittebene 40 für alle Detektormodule 21-24. In dieser gemeinsamen Schnittebene 40 liegen die Sensorebenen 16 aller Detektormodule 21-24, wobei die Detektormodule 21-24 jeweils einen Teil der ersten Schnittlinie 11 überdecken.

Die Messrichtung MR entlang des Kreisbogens 15 der ersten Schnittlinie 11 mit dem Radius R1, in der die Sensorelemente 14 in einem jeweiligen Detektormodul 21-24 aufeinander folgen, springt hier von Detektormodul 21-24 zu Detektormodul 21-24. Dabei wird aber mit der Gesamtheit der Detektormodule 21-24 wiederum ein geschlossener Gesamt-Raumwinkelbereich, hier Gesamt-Polarwinkelbereich, zwischen den Polarwinkeln α1 (hier ca. 5°) bei Sensorelement 14a an Verbindungsgerade 25 und dem Polarwinkel α2 (hier ca. 90°) bei Sensorelement 14b bei Verbindungsgerade 26 abgedeckt. Jedes einzelne Detektormodul 21-24 deckt dabei jeweils einen Modul-Polarwinkelbereich von ca. 20-25° ab. An Sprüngen zwischen Detektormodulen 21-24, etwa den Detektormodulen 21 und 22, folgt hier auf den Polarwinkel eines letzten Sensorelements 14c eines Detektormoduls 21 unmittelbar anschließend (lückenlos) der Polarwinkel des nächsten Sensorelements 14d des nächsten Detektormoduls 22. Die Einfallswinkel zwischen den Verbindungsgeraden 25, 26 und dem Lot/Flächnenormalen der gemeinsamen Schnittebene 40 ist für alle Sensorelemente des Detektormoduls wiederum gleich (nicht näher dargestellt).

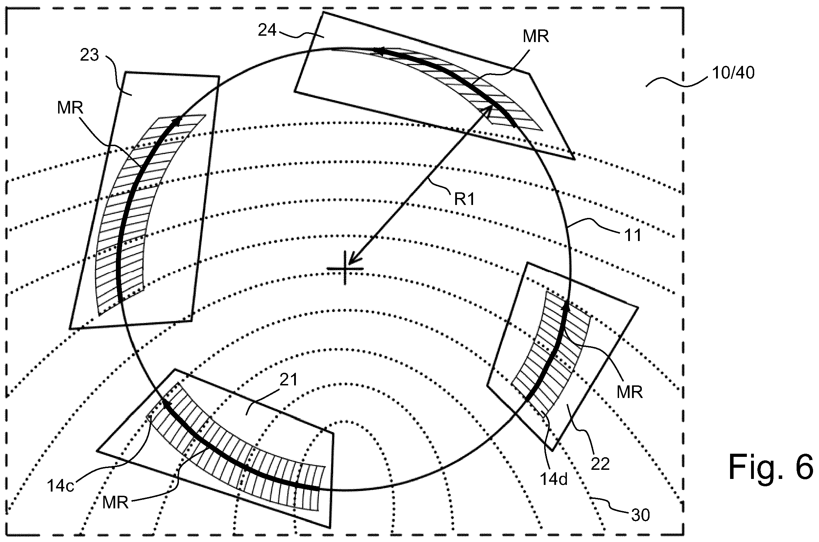

Die lückenlose Abdeckung des Gesamt-Polarwinkelbereichs ist auch in **Fig.** 6 in der Aufsicht gut zu erkennen. Die Sensorelemente 14c und 14d der Detektormodule 21 und 22 grenzen jeweils von unterschiedlicher Seite an die zweite Schnittlinie 30, die einen bestimmten Polarwinkel repräsentiert. Zusätzlich sind hier die Abschnitte der gekrümmten und springenden Messrichtung MR auf den Detektormodulen 21-24 jeweils mit dick gezeichneten Pfeilen gekennzeichnet.

Es wird angemerkt, dass alternativ zu einer angrenzenden Anordnung auch eine Überlappung der Polarwinkelbereiche der Detektormodule 21-24 eingerichtet sein kann (nicht näher dargestellt).

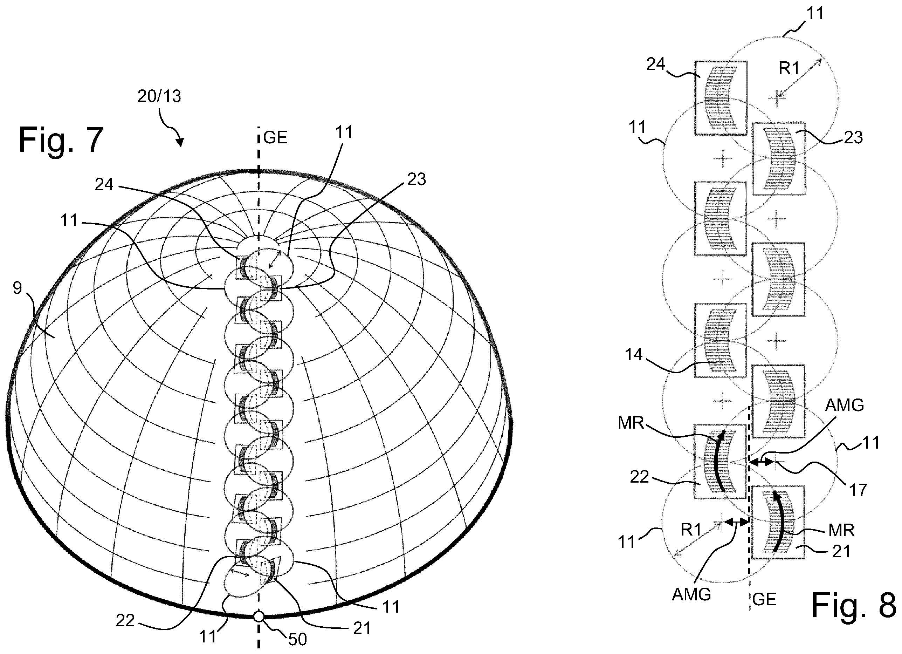

Die **Fig.** 7 in Schrägansicht und die **Fig.** 8 in ebenen Projektion illustrieren eine dritte Ausführungsform einer erfindungsgemäßen Messanordnung 20, bei der der Röntgendetektor 13 ein Vielzahl von Detektormodulen aufweist; beispielhaft sind die Detektormodule 21, 22, 23, 24 markiert.

Zu jedem Detektormodul 21-24 gehört eine eigene Schnittebene (hier nicht näher dargestellt), die die gedachte Hilfskugel 9 (mit dem Radius R0 um die Probenposition, nicht näher dargestellt, vgl. aber Fig. 2 hierzu) schneidet; daraus ergibt sich jeweils eine eigene, lokale erste Schnittlinie 11 für jedes Detektormodul 21-24. In der gezeigten Ausführungsform sind die Radien R1 der ersten Schnittlinien 11 der Schnittebenen aller Detektormodule 21-24 identisch.

Die Detektormodule 21-24 weisen jeweils streifenförmige Sensorelemente 14 auf, deren Flächenschwerpunkte auf der jeweils zugehörigen (lokalen) ersten Schnittlinie 11 angeordnet sind, und entsprechend weisen diese Flächenschwerpunkte alle den Abstand R0 zur Probenposition auf. Die jeweilige lokale, gekrümmte Messrichtung MR, in der die Sensorelemente 14 hintereinander angeordnet sind, folgt dem Verlauf der lokalen ersten Schnittlinie 11 und springt wiederum von Detektormodul zu Detektormodul 21-24.

Die Detektormodule 21-24 und deren Sensorelemente 14 sind dabei so angeordnet, dass wiederum ein geschlossener Gesamt-Polarwinkelbereich durch die Gesamtheit aller Detektormodule 21-24 abgedeckt wird; der insgesamt abgedeckte Polarwinkelbereich beträgt hier ca. 80°, wobei jedes Detektormodul nur einen Modul-Polarwinkelbereich von ca. 6° abdeckt. Die je Detektormodul 21-24 abgedeckten Polarwinkelbereiche schließen hier wiederum unmittelbar aneinander an.

In der gezeigten Ausführungsform weisen die Detektormodule 21-24 jeweils eine identische Bauform auf, wenngleich sie alternierend orientiert sind. Die Detektormodule 21-24 sind alle nahe einer Grundebene GE angeordnet, wobei die Grundebene GE die Einstrahlrichtung enthält (vgl. den Durchstoßpunkt 50 der Einstrahlrichtung durch die Hilfskugel 9). Die Mittelpunkte 17 der ersten Schnittlinien 11 weisen hier jeweils einen gleichen Abstand AMG zur Grundebene GE auf, der hier ca. 1/20*R0 beträgt. Der Radius R1 beträgt hier ca. 1/17*R0.

Bei dieser Bauform trifft von der Probenposition ausgehende Röntgenstrahlung nahezu senkrecht auf die Detektormodule 21-24 bzw. deren Sensorebenen, wodurch Parallax-Effekte minimiert sind.

Man beachte, dass in Fig. 7 der jeweilige Teil der Sensorelemente 14 und Detektormodule 21-24, der unterhalb der geschnittenen gedachten Hilfskugel 9 liegt, gestrichelt dargestellt ist.

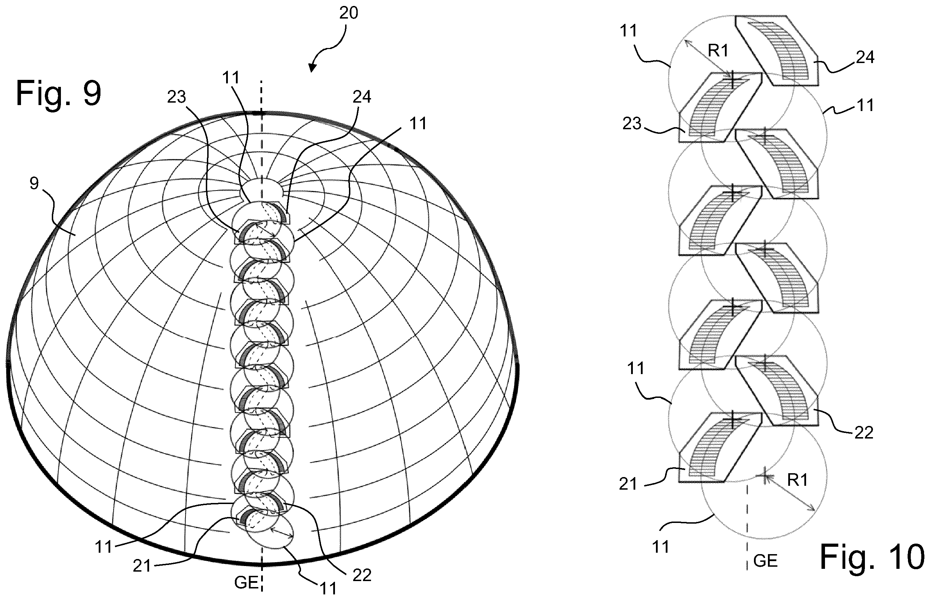

In der vierten Ausführungsform einer Messanordnung 20, die in **Fig.** 9 in Schrägansicht und in **Fig. 10** in einer ebenen Projektion dargestellt ist, werden zwei spiegelsymmetrische Typen von Detektormodulen 21-24 verwendet; die markierten Detektormodule 21, 23 gehören zu einem ersten Typ, und die Detektormodulen 22, 24 zu einem zweiten Typ. Dadurch können die Detektormodule 21-24 etwas näher zusammenrücken, und insbesondere mit ihren Mittelpunkten 17 der ersten Schnittlinien 11 näher an die Grundebene GE heranrücken als in der dritten Ausführungsform. Ansonsten entspricht die vierte Ausführungsform der dritten Ausführungsform.

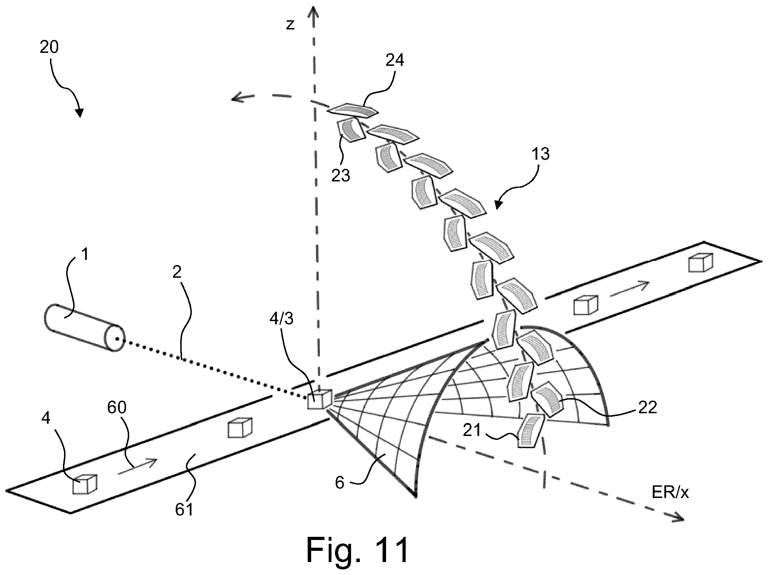

Die **Fig. 11** illustriert schematisch eine Ausführungsform einer erfindungsgemäßen Messanordnung 20, die für eine online-Qualitätskontrolle von Proben 4 eingesetzt wird. Die Bauform der Messanordnung entspricht weitgehend der vierten Ausführungsform von Fig. 9 und Fig. 10.

Auf einem Förderband 61 sind zu überprüfende Proben 4 angeordnet, die mit dem Förderband über eine Probenposition 3 gefördert werden, vgl. Förderrichtung 60. Eine Probe 4, die sich gerade an der Probenposition 3 befindet, wird von einem Röntgenstrahl 2 aus einer ortsfesten Röntgenquelle 1 bestrahlt. Dadurch wird von der Probe 4 an der Probenposition 3 ausgehende, gebeugte Röntgenstrahlung erzeugt; beispielhaft ist der Hilfs-Kegelmantel 6 einer bestimmten Kristallebene eines Probenbestandteils eingezeichnet.

Mit einem Röntgendetektor 13 wird die gebeugte Röntgenstrahlung vermessen. Der Röntgendetektor 13 verfügt über eine Vielzahl von Detektormodulen; beispielhaft sind die Detektormodulen 21, 22, 23 und 24 markiert. Mit den Detektormodulen 21-24 kann ein geschlossener Gesamt-Polarwinkelbereich auf einmal überwacht werden, so dass für die Überprüfung der Probe 4 es nicht erforderlich ist, den Röntgendetektor 13 bzw. die Detektormodule 21-24 zu drehen oder sonst zu bewegen; entsprechend ist der Röntgendetektor 13 hier ebenfalls ortsfest. Insbesondere können alle etwaigen von der Probe 4 erzeugten Röntgenreflexe im abgedeckten Gesamt-Polarwinkelbereich gleichzeitig vermessen werden.

Im Rahmen der Messung der Proben 4 können Verunreinigungen in einer Probe 4 oder auch zu gering oder zu viel vorhandene Probenbestandteile schnell erkannt werden, und gegebenenfalls können Proben 4 unzureichender Qualität entsprechend aussortiert werden.

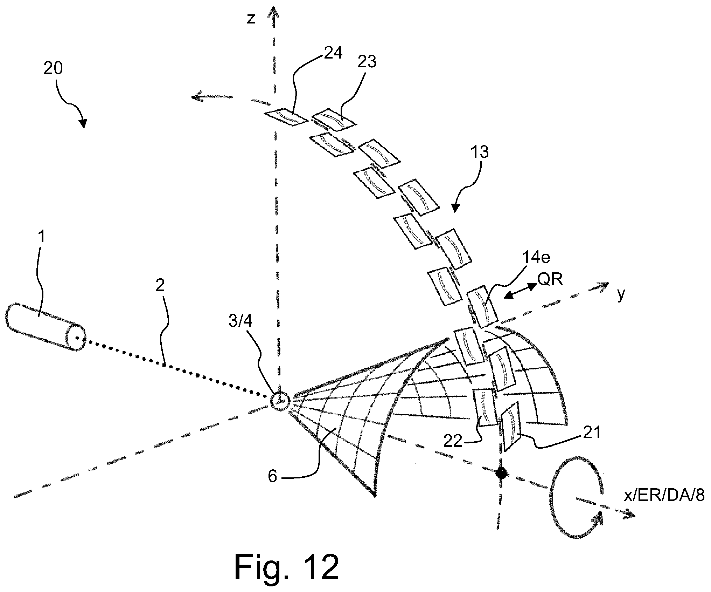

Die **Fig. 12** zeigt eine Ausführungsform einer Messanordnung 20, die für eine Stressmessung (Messung elastischer Spannungen) eingesetzt werden kann. Ausführungsform entspricht weitgehend der dritten Ausführungsform von Fig. 7 und Fig. 8.

Eine pulverförmige Probe 4 (nicht näher dargestellt) an der Probenposition 3 wird mit einem Röntgenstrahl 2 aus der Röntgenquelle 1 bestrahlt. Dadurch entsteht im spannungsfreien Zustand der Probe 4 gebeugte Röntgenstrahlung, die sich rotationssymmetrisch um die Einstrahlrichtung ER verteilt, vgl. den beispielhaften, um die Kegelachse 8 rotationssymmetrischen Hilfs-Kegelmantel 6 für eine bestimmte Kristallebene der Probe 4. Mit einem Röntgendetektor 13 umfassend eine Vielzahl von Detektormodulen, beispielhaft markiert mit 21-24, kann die gebeugte Röntgenstrahlung detektiert werden. Die Detektormodule 21-24 decken in ihrer Gesamtheit einen geschlossenen Polarwinkelbereich von hier ca. 80° ab.

Man beachte, dass die Detektormodule 21-24 hier jeweils eine Vielzahl von aufeinanderfolgenden, näherungsweise quadratischen Sensorelementen 14e aufweisen. Die Sensorelemente 14e weisen also nur einen kleinen Messbereich in Querrichtung QR auf.

Wenn die Probe 4 elastische Spannungen (etwa durch ein gerichtetes Verpressen der Probe 4) aufweist, so verzerrt sich ein jeweiliger, zu einer Gitterebene gehörender Hilfs-Kegelmantel 6. Beispielsweise kann der Radius des Hilfs-Kegelmantels 6 im Bereich der Detektormodule 21-24 in y-Richtung etwas größer sein als in z-Richtung. Diese Verzerrung kann dadurch erkannt und bestimmt werden, dass der Röntgendetektor 13 bzw. die Gesamtheit der Detektormodule 21-24 um eine Drehachse DA, die der Einstrahlrichtung ER des Röntgenstrahls 2 entspricht, gedreht wird und eine Vermessung der gebeugten Röntgenstrahlung in verschiedenen Drehstellungen des Röntgendetektors 13 um die Drehachse DA erfolgt, beispielsweise in der in Fig. 12 gezeigten Stellung und in einer dazu um 90° um die Drehachse DA gedrehten Stellung.

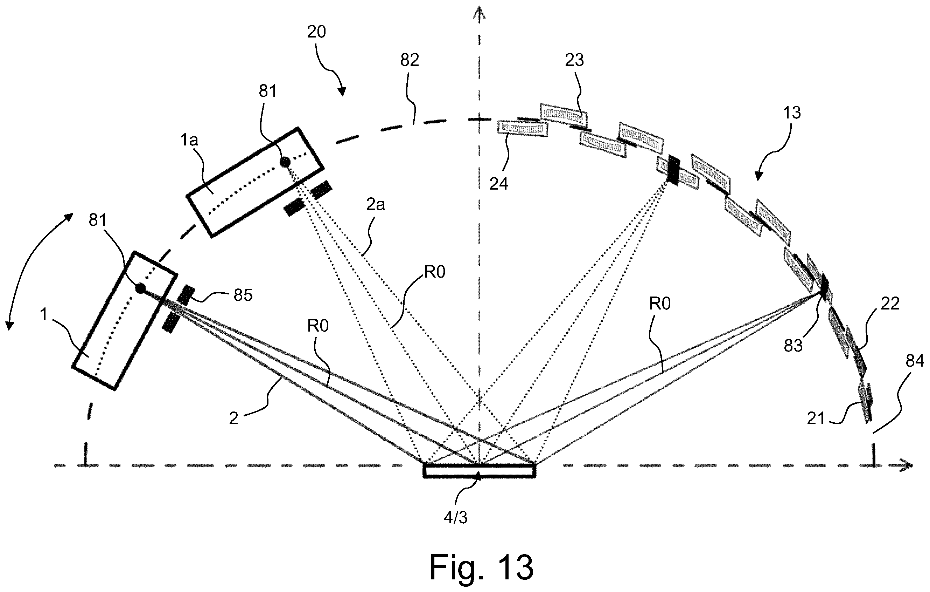

Die **Fig. 13** zeigt eine weitere Ausführungsform einer erfindungsgemäßen Messanordnung 20 in einer Bragg-Brentano-Geometrie.

Bei dieser Bauform erzeugt eine Röntgenquelle 1 einen Röntgenstrahl 2 (vgl. durchgezogene Strahllinien), der an der Probe 4 an der Probenposition 3 gebeugt wird. Die Röntgenquelle 1 bzw. deren Quellfokus 81 befindet sich dabei in einem Abstand R0 von der Probenposition 3 (Man beachte, dass die Größe der Probe 4 und die Divergenz des Röntgenstrahls 2 hier stark übertrieben dargestellt sind).

Entsprechend wird der gebeugte Röntgenstrahl auch in einem Abstand R0 zur Probenposition 3 fokussiert ("para-fokussierende Geometrie").

Im Abstand R0 von der Probenposition werden die Flächenschwerpunkte der Sensorelemente 14 der Detektormodule, bespielhaft hier markiert mit 21-24, angeordnet. Dadurch können besonders scharfe Beugungsreflexe und entsprechend eine besonders hohe Auflösung bei der Beugungsmessung der Probe 4 erhalten werden.

Man beachte, dass die Röntgenquelle 1 in der Bragg-Brentano-Geometrie üblicherweise über den Kreisbogen 82 mit dem Radius R0 gescannt wird, um die Beugungsinformation der Probe 4 zu erhalten; entsprechend bewegt sich auch die Position des Fokus 83 des gebeugten Röntgenstrahls über einen Kreisbogen 84, nahe dem die Detektormodule 21-24 angeordnet sind.

Durch die Abdeckung eines großen, zusammenhängenden Gesamt-Polarwinkelbereichs (hier ca. 80°) mit dem Röntgendetektor 13, also der Gesamtheit der Detektormodule 21-24, ist es in der Regel nicht nötig, den Röntgendetektor 13 während eines solchen Scans zu bewegen, was baulich besonders einfach ist. Zudem kann (im Vergleich zu einer Vermessung eines jeweiligen gebeugten Reflexes mit einem nulldimensionalen Detektor zu einer jeweiligen Scanposition der Röntgenquelle 1) die Probe 4 erheblich schneller und/oder mit mehr Signalintensität pro Winkelelement vermessen werden.

Falls gewünscht, kann zusätzlich zur Röntgenquelle 1 eine weitere Röntgenquelle 1a vorgesehen sein, die mit einer von der Röntgenquelle 1 abweichenden Wellenlänge betrieben wird, vgl. den weiteren Röntgenstrahl 2a (gepunktet dargestellt). Die weitere Röntgenquelle 1a bzw. deren Quellfokus 81 ist ebenfalls im Abstand R0 zur Probenposition 3 angeordnet. Mit den beiden Röntgenquellen 1, 1a kann alternativ, gleichzeitig oder hintereinander eine Beugungsmessung an der Probe 4 durchgeführt werden. Falls es bei einer Wellenlänge zu einer Überlagerung von Beugungsreflexen verschiedener Probenbestandteile kommt, ist dies mit der andern Wellenlänge meist nicht der Fall. Zudem kann die Anregung einer Röntgenfluoreszenz eines Probenbestandteils, die bei einer Wellenlänge auftritt (und das Reflex-zu-Untergrund-Verhältnis verschlechtert), meist mit der anderen Wellenlänge vermieden werden.

Man beachte, dass auf Grund der perspektivischen Darstellung der Fig. 13 der Kreisbogen 82 (mit Radius R0 und Kreismittelpunkt im Zentrum der Probenposition 3) und der Kreisbogen 84 (ebenfalls mit Radius R0 und Kreismittelpunkt im Zentrum der Probenposition 3) leicht elliptisch verzerrt dargestellt sind.

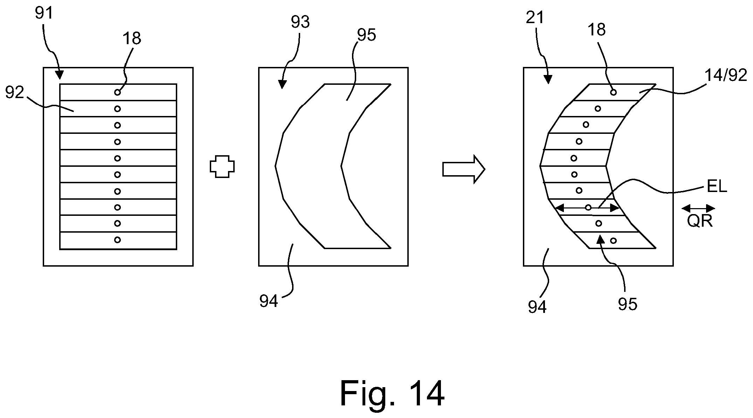

Die **Fig. 14** erläutert beispielhaft die Einrichtung eines Detektormoduls 21 mit einer Abfolge von Sensorelementen 14, deren Flächenschwerpunkte 18 nicht auf einer geraden Linie aufeinander folgen, sondern entlang eines Kreisbogens, zur Verwendung mit der Erfindung.

Im einfachsten Fall werden die Detektormodule 21 originär mit Sensorelementen der gewünschten Abfolge von Flächenschwerpunkten 18 entlang eines Kreisbogens auf dem Substrat (Wafer) des Detektormoduls 21 gefertigt.

Es ist aber auch möglich, ein herkömmliches Detektormodul 91, welches eine Abfolge von hier streifenförmigen Sensorelementen 92 mit den Flächenschwerpunkten ("Zentren" der röntgensensitiven Fläche) in gerader Linie aufweist (links dargestellt), mit einer Maske 93 (mittig dargestellt) aus röntgenundurchlässigem Material, etwa einer ausreichend dicken Schicht Blei, abzuschatten. Die Maske 93 weist einen abschattenden Rand 94 und eine Durchbruchöffnung 95 auf.

Wird die Maske 93 auf dem herkömmlichen Detektormodul 91 angeordnet, können Teile der Sensorelemente 92 abgedeckt und gegenüber der Probenposition abgeschattet werden. Nach der Abdeckung (rechts dargestellt) verbleiben effektive Sensorelemente 14, deren Flächenschwerpunkte 18 in der gewünschten Weise aufeinander folgen, nämlich entlang einer Kreislinie (vgl. die erste Schnittlinie 11 beispielsweise in Fig. 3), und das solchermaßen modifizierte Detektormodul 21 kann im Rahmen der Erfindung eingesetzt werden.

Unabhängig davon, ob ein Detektormodul 21 originär gefertigt oder durch Abschattung mit einer Maske 93 erhalten wird, haben die gleichbeabstandeten Sensorelemente 14 des Detektormoduls 21 (und typischerweise alle Sensorelemente 14 des Detektormoduls 21) bevorzugt eine gleiche effektive Länge EL (gemessen in Querrichtung QR), so dass die mit den verschiedenen Sensorelementen 14 gemessenen Röntgenintensitäten gut vergleichbar sind. Die Flächenschwerpunkte 18 werden mit den (tatsächlich nutzbaren, nicht abgeschatteten) Sensorelementen 14 bestimmt; ein jeweiliger Flächenschwerpunkt 18 kann an der der Probenposition zugewandten Oberfläche des Sensorelements 14 bestimmt werden.

### Bezugszeichenliste

- 1: Röntgenquelle
- 1a: weitere Röntgenquelle
- 2: Röntgenstrahl
- 2a: weiterer Röntgenstrahl
- 3: Probenposition
- 4: Probe
- 5: Scheitelpunkt
- 6, 7: Hilfs-Kegelmantel / Hilfs-Kegelmantelfläche
- 8: Kegelachse
- 9: Hilfskugel
- 10: Schnittebene
- 11: erste Schnittlinie
- 13: Röntgendetektor
- 14: (streifenförmiges) Sensorelement
- 14a: (unterstes) Sensorelement
- 14b: (oberstes) Sensorelement
- 14c: (letztes) Sensorelement
- 14d: (nächstes) Sensorelement
- 14e: (quadratisches) Sensorelement
- 15: Kreislinie
- 16: gemeinsame Sensorebene
- 17: Mittelpunkt der ersten Schnittlinie
- 18: Flächenschwerpunkt
- 20: Messanordnung
- 21-24: Detektormodul
- 25, 26: Verbindungsgerade
- 30, 31: zweite Schnittlinie
- 32: Tangente
- 40: gemeinsame Schnittebene
- 50: Durchstoßpunkt der Einstrahlrichtung
- 60: Förderrichtung
- 61: Förderband
- 81: Quellfokus
- 82: Kreisbogen
- 83: Fokus des gebeugten Röntgenstrahls
- 84: Kreisbogen
- 85: Blendenspalt
- 91: konventionelles Detektormodul
- 92: in gerader Linie aufgereihte Sensorelemente / teilweise abgeschattete Sensorelemente
- 93: Maske
- 94: röntgenundurchlässiger Rand
- 95: Durchbruchöffnung
- α1: Polarwinkel
- α2: Polarwinkel
- AMG: Abstand Mittelpunkt zu Grundebene
- EL: effektive Länge
- ER: Einstrahlrichtung
- DA: Drehachse
- GE: Grundebene
- MR: Messrichtung
- QR: Querrichtung
- R0: Radius Hilfskugel
- R1: Radius erste Schnittlinie
- X: Ortskoordinate
- Y: Ortskoordinate
- Z: Ortskoordinate

### Literaturliste

| | |
|---|---|
| [1] | B. Schmitt et al., Nuclear Instruments and Methods in Physics Research A 501 (2003), 267-272 "Mythen detector system" |
| [2] | G. Lutz, "Semiconductor Radiation Detectors - Device Physics", Springer-Verlag Berlin, 2. Auflage 2007, Seiten 109-111 und 229-233 |
| [3] | G. F. Knoll, "Radiation Detection and Measurement", John Wiley and Sons, Inc., New York, Second Edition 1989, Seite 190 |
| [4] | F. H. W. Heuck, E. Macherauch, "Forschung mit Röntgenstrahlen Bilanz eines Jahrhunderts (1895-1995)", Springer-Verlag Berlin 1995, Seiten 359-360 |
| [5] | L. Spieß et al., "Moderne Röntgenbeugung - Röntgendiffraktometrie für Materialwissenschaftler, Physiker und Chemiker", B.G. Teubner Verlag / GWV Fachverlage GmbH, Wiesbaden 2005, Seite 126 |
| [6] | ARL EQUINOX 100 Benchtop x-ray diffractometer, Firma Thermo Fisher Scientific, Firmendruckschrift "Thermo Scientific ARL EQUINOX 100 X-ray diffractometers", 11/2018 |
| [7] | FCT-ACTech Continuous On Stream Mineral Analyser COSMA http://www.fct-actech.com/site/pages/equipment.php heruntergeladen am 8.2.2019 |
| [8] | Firma INEL Inc., Stratham NH, USA; http://www.inel.us/index.php/accessories-xrd-inel-company/detector-curved-inel-company heruntergeladen am 8.2.2019 |
| [9] | Bogendetektor CirPAD der Firma imXPAD in Kooperation mit der Firma Synchrotron SOLEIL, Gif-sur-Yvette, Frankreich https://www.synchrotron-soleil.fr/en/news/new-detector-diffabsfast-measurements-x-ray-diffraction-images heruntergeladen am 7.2.2019 |
| [10] | Bogendetektor CirPAD in Präsentation "Résolution de structures à partir de diagrammes de diffraction de poudres", Erik Elkaim, Ecole de Cristallographie 17.-21. Oktober 2016, dortige Folie 12 |
| [11] | Ch. Broennimann et al. , J. Synchrotron Rad. (2006). 13, 120-130 "The PILATUS 1M Detector" |
| [12] | HyPix-Arc 150°, Firma Rigaku, https://www.rigaku.com/en/arc heruntergeladen am 8.2.2019 |
| [13] | Firmendruckschrift "Xstress 3000 G3/G3R", Stresstech GmbH, Rennerod, DE, undatiert, heruntergeladen 8.2.2019 |
| [14] | SmartSite RS portable stress analyzer, Firma Rigaku, https://www.rigaku.com/en/products/xrd/smartsite-rs heruntergeladen am 8.2.2019 |
| [15] | US 2017/0097309 A1 |
| [16] | International Tables for Crystallography, Fig. 2.3.4.1 |
| [17] | US 2018/0020996 A1 |

## Patentansprüche

1. Messanordnung (20) für Röntgenstrahlung, umfassend
- eine mit einem Röntgenstrahl (2) beleuchtbare Probenposition (3),
- eine Röntgenquelle (1), die einen Röntgenstrahl (2) entlang einer Einstrahlrichtung (ER) auf die Probenposition (3) richtet, und
- einen Röntgendetektor (13) zur Detektion von von der Probenposition (3) ausgehender Röntgenstrahlung, umfassend wenigstens ein Detektormodul (21-24),
wobei das Detektormodul (21-24) mehrere in einer Messrichtung (MR) aufeinanderfolgend angeordnete Sensorelemente (14; 14a-14e) aufweist, die jeweils einen Flächenschwerpunkt (18) aufweisen, wobei sich der Flächenschwerpunkt (18) jeweils auf eine Aktivzone des Sensorelements (14; 14a-14e) bezieht, wobei die Sensorelemente (14; 14a-14e) mit ihren Aktivzonen in einer gemeinsamen Sensorebene (16) des Detektormoduls (21-24) angeordnet sind,
wobei zu jedem Flächenschwerpunkt (18) eines Sensorelements (14; 14a-14e) ein Polarwinkel (*α1,* α2) definiert ist, gemessen zwischen der Einstrahlrichtung (ER) und einer Verbindungsgeraden (25, 26) von der Probenposition (3) zu diesem Flächenschwerpunkt (18),
und wobei für die verschiedenen Flächenschwerpunkte (18) der Sensorelemente (14; 14a-14e) eines Detektormoduls (21-24) die Polarwinkel (*α1,* α2) verschieden eingerichtet sind,
**dadurch gekennzeichnet,**
**dass** zumindest eine Mehrheit der Sensorelemente (14; 14a-14e) des Detektormoduls (21-24), bevorzugt alle Sensorelemente (14; 14a-14e) des Detektormoduls (21-24), als gleichbeabstandetete Sensorelemenete (14; 14a-14e) ausgebildet sind, bei denen die Flächenschwerpunkte (18) der Sensorelemente (14; 14a-14e) einen gleichen Abstand R0 zur Probenposition (3) aufweisen.

2. Messanordnung (20) nach Anspruch 1, **dadurch gekennzeichnet,**
**dass** die Sensorebene (16) in einer Schnittebene (10) liegt, die eine Hilfskugel (9) mit dem Radius R0 um die Probenposition (3) schneidet, so dass die Flächenschwerpunkte (18) der gleichbeabstandeten Sensorelemente (14; 14a-14e) auf einer kreisförmigen ersten Schnittlinie (11) der Schnittebene (10) mit der Hilfskugel (9) liegen, wobei die kreisförmige erste Schnittlinie (11) einen Radius R1 aufweist,
und **dass** die Schnittebene (10) beabstandet von der Probenposition (3) liegt.

3. Messanordnung (20) nach Anspruch 1 oder 2, **dadurch gekennzeichnet, dass** an der Probenposition (3) eine zu untersuchende Probe (4) angeordnet ist.

4. Messanordnung (20) nach einem der vorhergehenden Ansprüche, **dadurch gekennzeichnet, dass** zumindest die gleichbeabstandeten Sensorelemente (14; 14a-14e) als streifenförmige Sensorelemente (14; 14a-14d) ausgebildet sind.

5. Messanordnung (20) nach den Ansprüchen 2 und 4, **dadurch gekennzeichnet, dass** ein jeweiliges streifenförmiges gleichbeabstandetes Sensorelement (14; 14a-14d) so ausgerichtet ist, dass eine Hilfs-Kegelmantelfläche (6, 7) mit einem Scheitelpunkt (5) an der Probenposition (3) und einer Kegelachse (8) entlang oder entgegen der Einstrahlrichtung (ER) einen Schnittpunkt mit dem streifenförmigen Sensorelement (14; 14a-14d) an dessen Flächenschwerpunkt (18) hat, und das streifenförmige gleichbeabstandete Sensorelement (14; 14a-14d) zumindest näherungsweise entlang einer zweiten Schnittlinie (30, 31) der Hilfs-Kegelmantelfläche (6, 7) mit der Schnittebene (10) verläuft.

6. Messanordnung (20) nach Anspruch 5, **dadurch gekennzeichnet, dass** das streifenförmige gleichbeabstandete Sensorelement (14; 14a-14d) entlang einer Tangente (32) der zweiten Schnittlinie (30, 31) am Flächenschwerpunkt (18) des Sensorelements (14; 14a-14d) in der Schnittebene (10) verläuft.

7. Messanordnung (20) nach einem der Ansprüche 4 bis 6, **dadurch gekennzeichnet, dass** die streifenförmigen gleichbeabstandeten Sensorelemente (14; 14a-14d) des Detektormoduls (21-24) eine gleiche effektive Länge EL aufweisen, über die von der Probenposition (3) ausgehende Röntgenstrahlung durch das jeweilige streifenförmige Sensorelement (14; 14a-14d) registriert werden kann.

8. Messanordnung (20) nach einem der vorhergehenden Ansprüche, **dadurch gekennzeichnet, dass** das Detektormodul (21-24) eine Maske (93) aufweist, mit der zumindest bei einem Teil der Sensorelemente (14; 14a-14e) des Detektormoduls (21) ein Teil des jeweiligen Sensorelements (92) gegenüber der Probenposition (3) abgeschattet wird.

9. Messanordnung (20) nach einem der Ansprüche 1 bis 8, **dadurch gekennzeichnet, dass** die Messanordnung (20) mehrere Detektormodule (21-24) aufweist, wobei die Sensorebenen (10) der mehreren Detektormodule (21-24) in einer gemeinsamen Schnittebene (40) liegen.

10. Messanordnung (20) nach einem der Ansprüche 1 bis 8, **dadurch gekennzeichnet, dass** die Messanordnung (20) mehrere Detektormodule (21-24) aufweist, wobei die Sensorebenen (16) der mehreren Detektormodule (21-24) in verschiedenen Schnittebenen (10) liegen.

11. Messanordnung (20) nach Anspruch 10, **dadurch gekennzeichnet, dass** um die Probenposition (3) eine Hilfskugel (9) mit dem Radius R0 liegt, die von den verschiedenen Schnittebenen (10) der Detektormodule (21-24) geschnitten wird, so dass die Flächenschwerpunkte (18) der gleichbeabstandeten Sensorelemente (14; 14a-14e) eines jeweiligen Detektormoduls (21-24) jeweils auf einer kreisförmigen ersten Schnittlinie (11) der jeweiligen Schnittebene (10) mit der Hilfskugel (9) liegen, wobei die jeweiligen kreisförmigen ersten Schnittlinien (11) einen gleichen Radius R1 aufweisen,
und dass die jeweiligen ersten Schnittebenen (11) beabstandet von der Probenposition (3) liegen.

12. Messanordnung (20) nach Anspruch 11,
**dadurch gekennzeichnet,**
**dass** die Mittelpunkte (17) der kreisförmigen ersten Schnittlinien (11) auf oder nahe einer gemeinsamen Grundebene (GE) liegen, die die Einstrahlrichtung (ER) enthält, insbesondere wobei für einen jeweiligen Abstand AMG zwischen einem jeweiligen Mittelpunkt (17) und der Grundebene (GE) gilt: AMG ≤ 1/10*R0.

13. Messanordnung (20) nach einem der Ansprüche 11 oder 12, **dadurch gekennzeichnet, dass** gilt: R1 ≤ 1/5*R0, bevorzugt R1 ≤ 1/10*R0.

14. Messanordnung (20) nach einem der Ansprüche 9 bis 13, **dadurch gekennzeichnet, dass** die Detektormodule (21-24) mit ihren Sensorelementen (14; 14a-14e) jeweils einen Modul-Winkelbereich von von der Probenposition (3) ausgehender Röntgenstrahlung lückenlos abdecken, und durch die Gesamtheit der Detektormodule (21-24) ein Gesamt-Winkelbereich von von der Probenposition (3) ausgehender Röntgenstrahlung lückenlos abgedeckt wird, wobei der Gesamt-Winkelbereich größer ist als jeder der Modul-Winkelbereiche.

15. Messanordnung (20) nach Anspruch 14,
**dadurch gekennzeichnet, dass** die Detektormodule (21-24) jeweils einen Modul-Polarwinkelbereich lückenlos abdecken, und die Gesamtheit der Detektormodule (21-24) einen Gesamt-Polarwinkelbereich lückenlos abdeckt, wobei zugehörige Polarwinkel (*α1,* α2) mit Bezug zur Einstrahlrichtung (ER) gemessen werden.

16. Messanordnung (20) nach einem der Ansprüche 9 bis 15, **dadurch gekennzeichnet,**
**dass** die Detektormodule (21-24) mit einer geometrisch gleichen Abfolge der Sensorelemente (14; 14a-14e) ausgebildet sind, insbesondere wobei die Sensorelemente insgesamt baugleich ausgebildet sind,
oder dass die Detektormodule (21-24) mit lediglich zwei unterschiedlichen geometrischen Abfolgen der Sensorelemente (14; 14a-14e) ausgebildet sind, insbesondere wobei die beiden geometrische Abfolgen spiegelsymmetrisch zueinander sind, und insbesondere wobei die Detektormodule (21-24) mit den unterschiedlichen geometrischen Abfolgen insgesamt spiegelsymmetrisch zueinander aufgebaut sind.

17. Messanordnung (20) nach einem der vorhergehenden Ansprüche,
**dadurch gekennzeichnet, dass** die Röntgenquelle (1) oder ein Zwischenfokus der Röntgenquelle (1) in einem Abstand R0 von der Probenposition (3) angeordnet ist, und dass eine zu vermessende Probe (4) an der Probenposition (3) angeordnet ist, welche den einfallenden Röntgenstrahl (2) beugt, so dass ein Teil der gebeugten Röntgenstrahlung in einem Abstand R0 von der Probenposition (3) fokussiert wird.

18. Verwendung einer Messanordnung (20) nach einem der vorhergehenden Ansprüche zur Durchführung einer Röntgenbeugungsmessung an einer Probe (4), die an der Probenposition (3) angeordnet ist, wobei ein Röntgenstrahl (2) entlang einer Einstrahlrichtung (ER) auf die Probe (4) gerichtet wird, wobei mit dem Röntgendetektor (13) von der Probe (4) ausgehende Röntgenstrahlung detektiert wird, und wobei während der Vermessung der Probe (4) der Röntgendetektor (13) ortsfest bleibt oder lediglich um die Einstrahlrichtung (ER) gedreht wird.

## Claims

1. A measuring arrangement (20) for x-ray radiation, comprising
- a specimen position (3) capable of being illuminated by an x-ray beam (2),
- an X-ray source (1) directing an X-ray beam (2) along a direction of irradiation (ER) onto the sample position (3), and
- an x-ray detector (13) serving to detect x-ray radiation which emanates from the specimen position (3) and comprising at least one detector module (21-24),
wherein the detector module (21-24) comprises a plurality of sensor elements (14; 14a-14e) which are arranged in succession in a measurement direction (MR) and which each have a centroid (18), wherein the centroid (18) relates to one active zone of the sensor element (14; 14a-14e) in each case, wherein the sensor elements (14; 14a-14e) are arranged with their active zones in a common sensor plane (16) of the detector module (21-24),
wherein a polar angle (*α1,* α2) is defined for each centroid (18) of a sensor element (14; 14a-14e), measured between the direction of irradiation (ER) and a connecting straight line (25, 26) from the specimen position (3) to this centroid (18),
and wherein the polar angles (α1, α2) are configured differently for the different centroids (18) of the sensor elements (14; 14a-14e) of a detector module (21-24),
in that at least a majority of the sensor elements (14; 14a-14e) of the detector module (21-24), preferably all sensor elements (14; 14a-14e) of the detector module (21-24), are designed as uniformly spaced apart sensor elements (14; 14a-14e), for which the centroids (18) of the sensor elements (14; 14a-14e) each have the same distance R0 from the specimen position (3).

2. The measuring arrangement (20) as claimed in claim 1, **characterized in that** the sensor plane (16) is located in a sectional plane (10) which intersects an auxiliary sphere (9) with the radius R0 around the specimen position (3) such that the centroids (18) of the uniformly spaced apart sensor elements (14; 14a-14e) are located on a circular first line of intersection (11) of the sectional plane (10) with the auxiliary sphere (9), wherein the circular first line of intersection (11) has a radius R1,
and **in that** the sectional plane (10) is located at a distance from the specimen position (3).

3. The measuring arrangement (20) as claimed in claim 1 or 2, **characterized in that** a specimen (4) to be examined is arranged at the specimen position (3).

4. The measuring arrangement (20) as claimed in any one of the preceding claims, **characterized in that** at least the uniformly spaced apart sensor elements (14; 14a-14e) are in the form of strip-shaped sensor elements (14; 14a-14d).

5. The measuring arrangement (20) as claimed in claims 2 and 4, **characterized in that** a respective strip-shaped uniformly spaced apart sensor element (14; 14a-14d) is aligned such that an auxiliary lateral conical surface (6, 7) with an apex (5) at the specimen position (3) and a cone axis (8) in or counter to the direction of irradiation (ER) has a point of intersection with the strip-shaped sensor element (14; 14a-14d) at the centroid (18) of the latter, and the strip-shaped uniformly spaced apart sensor element (14; 14a-14d) extends at least approximately along a second line of intersection (30, 31) of the auxiliary lateral conical surface (6, 7) with the sectional plane (10).

6. The measuring arrangement (20) as claimed in claim 5, **characterized in that** the strip-shaped uniformly spaced apart sensor element (14; 14a-14d) extends along a tangent (32) of the second line of intersection (30, 31) at the centroid (18) of the sensor element (14; 14a-14d) in the sectional plane (10).

7. The measuring arrangement (20) as claimed in any one of claims 4 to 6, **characterized in that** the strip-shaped uniformly spaced apart sensor elements (14; 14a-14d) of the detector module (21-24) have the same effective length EL, over which x-ray radiation emanating from the specimen position (3) can be registered by the respective strip-shaped sensor element (14; 14a-14d).

8. The measuring arrangement (20) as claimed in any one of the preceding claims, **characterized in that** the detector module (21-24) has a mask (93), by means of which a portion of the respective sensor element (92) is shadowed in relation to the specimen position (3) in the case of at least some of the sensor elements (14; 14a-14e) of the detector module (21).

9. The measuring arrangement (20) as claimed in any one of claims 1 to 8, **characterized in that** the measuring arrangement (20) comprises a plurality of detector modules (21-24), wherein the sensor planes (10) of the plurality of detector modules (21-24) are located in a common sectional plane (40).

10. The measuring arrangement (20) as claimed in any one of claims 1 to 8, **characterized in that** the measuring arrangement (20) comprises a plurality of detector modules (21-24), wherein the sensor planes (16) of the plurality of detector modules (21-24) are located in different sectional planes (10).

11. The measuring arrangement (20) as claimed in claim 10, **characterized in that** an auxiliary sphere (9) with the radius R0 is located around the specimen position (3) and said auxiliary sphere is intersected by the various sectional planes (10) of the detector modules (21-24) such that the centroids (18) of the uniformly spaced apart sensor elements (14; 14a-14e) of a respective detector module (21-24) are located on a circular first line of intersection (11) of the respective sectional plane (10) with the auxiliary sphere (9) in each case, wherein the respective circular first lines of intersection (11) have the same radius R1,
and **in that** the respective first sectional planes (11) are located at a distance from the specimen position (3).

12. The measuring arrangement (20) as claimed in claim 11, **characterized**
**in that** the centers (17) of the circular first lines of intersection (11) are located on or near a common base plane (GE) which contains the direction of irradiation (ER), in particular wherein the following applies to a respective distance AMG between a respective center (17) and the base plane (GE): AMG ≤ 1/10*R0.

13. The measuring arrangement (20) as claimed in either of claims 11 or 12, **characterized in that** the following applies: R1 ≤ 1/5*R0, preferably R1 ≤ 1/10*R0.

14. The measuring arrangement (20) as claimed in any one of claims 9 to 13, **characterized in that** the detector modules (21-24) each cover a module angle range of x-ray radiation emanating from the specimen position (3) without gaps by way of their sensor elements (14; 14a-14e), and an overall angle range of x-ray radiation emanating from the specimen position (3) is covered without gaps by the totality of the detector modules (21-24), wherein the overall angle range is greater than each of the module angle ranges.

15. The measuring arrangement (20) as claimed in claim 14, **characterized in that** the detector modules (21-24) each cover a module polar angle range without gaps, and the totality of the detector modules (21-24) covers an overall polar angle range without gaps, wherein associated polar angles (α1, α2) are measured in relation to the direction of irradiation (ER).

16. The measuring arrangement (20) as claimed in any one of claims 9 to 15, **characterized**
**in that** the detector modules (21-24) are designed with the geometrically same sequence of the sensor elements (14; 14a-14e), in particular wherein the sensor elements collectively have the same structural embodiment,
or in that the detector modules (21-24) are designed with only two different geometric sequences of the sensor elements (14; 14a-14e), in particular wherein the two geometric sequences are mirror symmetric to one another, and in particular wherein the detector modules (21-24) with the different geometric sequences are collectively constructed mirror symmetrically with respect to one another.

17. The measuring arrangement (20) as claimed in any one of the preceding claims, **characterized in that** the x-ray source (1) or an intermediate focus of the x-ray source (1) is arranged at a distance R0 from the specimen position (3), and **in that** a specimen (4) to be measured is arranged at the specimen position (3) which diffracts the incident x-ray beam (2) such that some of the diffracted x-ray radiation is focused at a distance R0 from the specimen position (3).

18. The use of a measuring arrangement (20) as claimed in any one of the preceding claims for performing an X-ray diffraction measurement at a specimen (4) arranged at the specimen position (3), wherein an x-ray beam (2) is directed at the specimen (4) in a direction of irradiation (ER), wherein x-ray radiation emanating from the specimen (4) is detected by the x-ray detector (13) and wherein the x-ray detector (13) remains stationary or is only rotated around the direction of irradiation (ER) while the specimen (4) is measured.

## Revendications

1. Dispositif de mesure (20) pour le rayonnement X, comprenant
- une position d'échantillon (3) pouvant être éclairée par un faisceau de rayons X (2),
- une source de rayons X (1), qui dirige un faisceau de rayons X (2) le long d'une direction d'incidence (ER) vers la position d'échantillon (3), et
- un détecteur de rayons X (13) pour la détection du rayonnement X émanant de la position d'échantillon (3), comprenant au moins un module de détection (21-24),
où le module de détection (21-24) présente plusieurs éléments de capteur (14 ; 14a-14e) disposés successivement dans une direction de mesure (MR), chacun présentant un centre de gravité de surface (18), où le centre de gravité de surface (18) se rapporte à une zone active de l'élément de capteur (14 ; 14a-14e), où les éléments de capteur (14 ; 14a-14e) sont disposés avec leurs zones actives dans un plan de capteurs commun (16) du module de détection (21-24),
où pour chaque centre de gravité de surface (18) d'un élément de capteur (14 ; 14a-14e), un angle polaire (*α1,* α₂) est défini, mesuré entre la direction d'incidence (ER) et une droite de liaison (25, 26) de la position d'échantillon (3) à ce centre de gravité de surface (18),
et où pour les différents centres de gravité de surface (18) des éléments de capteur (14 ; 14a-14e) d'un module de détection (21-24), les angles polaires (*α1,* α₂) sont configurés différemment, **caractérisé en ce**
**qu'**au moins une majorité des éléments de capteur (14 ; 14a-14e) du module de détection (21-24), de préférence tous les éléments de capteur (14 ; 14a-14e) du module de détection (21-24), sont conçus comme éléments de capteur équidistants (14 ; 14a-14e), où les centres de gravité de surface (18) des éléments de capteur (14 ; 14a-14e) présentent une même distance R0 à la position d'échantillon (3).

2. Dispositif de mesure (20) selon la revendication 1, **caractérisé en ce que** le plan de capteurs (16) se trouve dans un plan de coupe (10), qui coupe une sphère auxiliaire (9) avec le rayon R0 autour de la position d'échantillon (3), de sorte que les centres de gravité de surface (18) des éléments de capteur équidistants (14 ; 14a-14e) se trouvent sur une première ligne d'intersection circulaire (11) du plan de coupe (10) avec la sphère auxiliaire (9), où la première ligne d'intersection circulaire (11) présente un rayon R1, et que le plan de coupe (10) est situé à distance de la position d'échantillon (3).

3. Dispositif de mesure (20) selon la revendication 1 ou 2, **caractérisé en ce qu'**un échantillon (4) à examiner est disposé à la position d'échantillon (3).

4. Dispositif de mesure (20) selon l'une des revendications précédentes, **caractérisé en ce qu'**au moins les éléments de capteur équidistants (14 ; 14a-14e) sont conçus comme éléments de capteur en forme de bande (14 ; 14a-14d).

5. Dispositif de mesure (20) selon les revendications 2 et 4, **caractérisé en ce qu'**un élément de capteur équidistant en forme de bande (14 ; 14a-14d) est orienté de telle sorte qu'une surface latérale conique auxiliaire (6, 7) avec un sommet (5) à la position d'échantillon (3) et un axe du cône (8) le long ou contre la direction d'incidence (ER) a un point d'intersection avec l'élément de capteur en forme de bande (14 ; 14a-14d) à son centre de gravité de surface (18), et l'élément de capteur équidistant en forme de bande (14 ; 14a-14d) s'étend au moins approximativement le long d'une deuxième ligne d'intersection (30, 31) de la surface latérale conique auxiliaire (6, 7) avec le plan de coupe (10).

6. Dispositif de mesure (20) selon la revendication 5, **caractérisé en ce que** l'élément de capteur équidistant en forme de bande (14 ; 14a-14d) s'étend le long d'une tangente (32) de la deuxième ligne d'intersection (30, 31) au centre de gravité de surface (18) de l'élément de capteur (14 ; 14a-14d) dans le plan de coupe (10).

7. Dispositif de mesure (20) selon l'une des revendications 4 à 6, **caractérisé en ce que** les éléments de capteur équidistants en forme de bande (14 ; 14a-14d) du module de détection (21-24) présentent une même longueur effective **EL,** sur laquelle le rayonnement X émanant de la position d'échantillon (3) peut être enregistré par ledit élément de capteur en forme de bande (14 ; 14a-14d).

8. Dispositif de mesure (20) selon l'une des revendications précédentes, **caractérisé en ce que** le module de détection (21-24) présente un masque (93), avec lequel au moins pour une partie des éléments de capteur (14 ; 14a-14e) du module de détection (21), une partie de l'élément de capteur respectif (92) est masqué par rapport à la position d'échantillon (3).

9. Dispositif de mesure (20) selon l'une des revendications 1 à 8, **caractérisé en ce que** le dispositif de mesure (20) présente plusieurs modules de détection (21-24), où les plans de capteurs (10) des plusieurs modules de détection (21-24) se trouvent dans un plan de coupe commun (40).

10. Dispositif de mesure (20) selon l'une des revendications 1 à 8, **caractérisé en ce que** le dispositif de mesure (20) présente plusieurs modules de détection (21-24), où les plans de capteurs (16) des plusieurs modules de détection (21-24) se trouvent dans différents plans de coupe (10).

11. Dispositif de mesure (20) selon la revendication 10, **caractérisé en ce qu'**une sphère auxiliaire (9) avec le rayon R0 se trouve autour de la position d'échantillon (3), qui est coupée par les différents plans de coupe (10) des modules de détection (21-24), de sorte que les centres de gravité de surface (18) des éléments de capteur équidistants (14 ; 14a-14e) d'un module de détection respectif (21-24) se trouvent chacun sur une première ligne d'intersection circulaire (11) du plan de coupe respectif (10) avec la sphère auxiliaire (9), où les premières lignes d'intersection circulaires respectives (11) présentent un même rayon R1,
et que les premiers plans de coupe respectifs (11) sont situés à distance de la position d'échantillon (3).

12. Dispositif de mesure (20) selon la revendication 11, **caractérisé en ce que** les centres (17) des premières lignes d'intersection circulaires (11) se trouvent sur ou près d'un plan de base commun (GE), qui contient la direction d'incidence (ER), en particulier où pour une distance respective AMG entre un centre respectif (17) et le plan de base (GE), il est valable : AMG ≤1/10*R0.

13. Dispositif de mesure (20) selon l'une des revendications 11 ou 12, **caractérisé en ce qu'**il est valable : R1 ≤ 1/5*R0, *de préférence R1* ≤ 1/10*R0.

14. Dispositif de mesure (20) selon l'une des revendications 9 à 13, **caractérisé en ce que** les modules de détection (21-24) avec leurs éléments de capteur (14 ; 14a-14e) couvrent chacun sans lacune une plage angulaire de module du rayonnement X émanant de la position d'échantillon (3), et que l'ensemble des modules de détection (21-24) couvre sans lacune une plage angulaire totale du rayonnement X émanant de la position d'échantillon (3), où la plage angulaire totale est supérieure à chacune des plages angulaires de module.

15. Dispositif de mesure (20) selon la revendication 14, **caractérisé en ce que** les modules de détection (21-24) couvrent chacun sans lacune une plage angulaire polaire de module, et que l'ensemble des modules de détection (21-24) couvre sans lacune une plage angulaire polaire totale, où les angles polaires (*α1,* α2) correspondants sont mesurés par rapport à la direction d'incidence (ER).

16. Dispositif de mesure (20) selon l'une des revendications 9 à 15, **caractérisé en ce que** les modules de détection (21-24) sont conçus avec une séquence géométrique identique des éléments de capteur (14 ; 14a-14e), en particulier où les éléments de capteur sont tous de construction identique, ou que les modules de détection (21-24) sont conçus avec seulement deux séquences géométriques différentes des éléments de capteur (14 ; 14a-14e), en particulier où les deux séquences géométriques sont symétriques par rapport à un miroir l'une par rapport à l'autre, et en particulier où les modules de détection (21-24) avec les différentes séquences géométriques sont globalement symétriques par rapport à un miroir l'un par rapport à l'autre.

17. Dispositif de mesure (20) selon l'une des revendications précédentes, **caractérisé en ce que** la source de rayons X (1) ou un foyer intermédiaire de la source de rayons X (1) est disposé à une distance R0 de la position d'échantillon (3), et qu'un échantillon (4) à mesurer est disposé à la position d'échantillon (3), lequel diffracte le faisceau de rayons X (2) incident, de sorte qu'une partie du rayonnement X diffracté est focalisée à une distance R0 de la position d'échantillon (3).

18. Utilisation d'un dispositif de mesure (20) selon l'une des revendications précédentes pour effectuer une mesure de diffraction des rayons X sur un échantillon (4), qui est disposé à la position d'échantillon (3), où un faisceau de rayons X (2) est dirigé le long d'une direction d'incidence (ER) sur l'échantillon (4), où le détecteur de rayons X (13) détecte le rayonnement X émanant de l'échantillon (4), et où pendant la mesure de l'échantillon (4), le détecteur de rayons X (13) reste fixe en position ou est seulement tourné autour de la direction d'incidence (ER).
